# EUROPÄISCHE PATENTSCHRIFT

(11) **EP 2 879 073 B1**
(45) Veröffentlichungstag und Bekanntmachung des Hinweises auf die Patenterteilung: **27.06.2018**
(21) Anmeldenummer: 14190035.7
(22) Anmeldetag: 23.10.2014
(51) Int. Cl.: G06F 21/34, G06F 21/41, H04L 29/06, G06Q 20/10, G06Q 20/12, G06Q 20/32, G06Q 20/34, G06Q 20/38, G06Q 20/40

(54) **ELEKTRONISCHES TRANSAKTIONSVERFAHREN UND COMPUTERSYSTEM**
ELECTRONIC TRANSACTION METHOD AND COMPUTER SYSTEM
PROCÉDÉ DE TRANSACTION ÉLECTRONIQUE ET SYSTÈME INFORMATIQUE

(30) Priorität: 27.11.2013 DE 102013224285
(43) Veröffentlichungstag der Anmeldung: 03.06.2015
(73) Patentinhaber: Bundesdruckerei GmbH, 10958 Berlin (DE)
(72) Erfinder: Morgner, Frank, 15537 Grünheide (DE); Schröder, Martin, 12437 Berlin (DE)
(74) Vertreter: Richardt Patentanwälte PartG mbB

(56) Entgegenhaltungen:
- DE-B3-102011 089 580
- "Architektur elektronischer Personalausweis und elektroni-scher Aufenthaltstitel", , 27. Mai 2011 (2011-05-27), XP055059591, Bonn, Germany Gefunden im Internet: URL:https://www.bsi.bund.de/DE/Publikation en/TechnischeRichtlinien/tr03127/tr-03127. html [gefunden am 2013-04-15]
- "Technical Guideline TR-03112-7 eCard-API-Framework - Protocols", , 7. Oktober 2011 (2011-10-07), Seiten 1-94, XP055059410, Gefunden im Internet: URL:https://www.bsi.bund.de/EN/Publication s/TechnicalGuidelines/TechnicalGuidelines_ node.html [gefunden am 2013-04-12]
- BSI: "Technische Richtlinie eID-Server", , 1. April 2010 (2010-04-01), Seiten 1-51, XP055001820, Bonn Gefunden im Internet: URL:https://www.bsi.bund.de/EN/Publication s/TechnicalGuidelines/TechnicalGuidelines_ node.html [gefunden am 2011-07-01]
- Jens Bender: "Sicher und unabhängig", , 30 April 2013 (2013-04-30), pages 146-149, XP055325089, Retrieved from the Internet: URL:http://epaper.heise.de/download/archiv /3ffeb712f1e4/ix.13.04.146-149.pdf [retrieved on 2016-12-01]

## Beschreibung

Die Erfindung betrifft ein elektronisches Transaktionsverfahren sowie ein Computersystem.

Für den elektronischen Handel, das heißt den sogenannten eCommerce, sind verschiedene Transaktionsverfahren bekannt. Dazu gehören übliche Zahlungsverfahren wie zum Beispiel eine papiergebundenen Überweisung oder die Zahlung per Nachnahme sowie elektronische Zahlungsverfahren, wie zum Beispiel Kreditkartenzahlung, die Zahlung per Online-Banking, Inkasso/Billing-Systeme, Factory-Systeme, elektronische Lastschrift, Prepaidverfahren, Zahlung per Telefonrechnung sowie Handy-Payment-Systeme. Solche Zahlungsverfahren werden zum Teil auch für eGovernment Anwendungen eingesetzt.

In der DE 10 2011 089 580 B3 ist ein Verfahren zum Lesen von Attributen aus einem ID-Token, der einem Nutzer zugeordnet ist, gezeigt.

Der Erfindung liegt demgegenüber die Aufgabe zugrunde, ein verbessertes elektronisches Transaktionsverfahren sowie ein entsprechendes Computersystem zu schaffen.

Die der Erfindung zugrunde liegende Aufgabe wird jeweils mit den Merkmalen der unabhängigen Patentansprüche erfüllt. Ausführungsformen der Erfindung sind in den abhängigen Patentansprüchen angegeben.

Unter einer "Transaktion" wird hier eine finanzielle Transaktion, wie zum Beispiel die Bezahlung eines Bezahlbetrags durch Vornahme einer Überweisung, eines Lastschrifteinzugs oder Belastung einer Kreditkarte, ein Bestellvorgang zur Bestellung und Lieferung eines physischen Gutes oder von Daten sowie andere logistische, Handels- und/oder Finanztransaktionen verstanden.

Unter einer "Session" wird hier eine temporäre Kommunikationsverbindung, das heißt eine sog. Communication Session, verstanden, die sich gemäß OSI-Schichtmodell auf die Transportschicht ("transport layer") oder die Anwendungsschicht ("application layer") beziehen kann. Insbesondere kann es sich bei einer Session um eine http-Session oder um eine https-Session handeln, wobei bei letzterer der Transportlayer durch eine symmetrische oder asymmetrische Verschlüsselung geschützt ist.

Unter einem "ID-Token" wird hier insbesondere ein tragbares elektronisches Gerät verstanden, welches zumindest einen Datenspeicher zur Speicherung des zumindest einen Attributs und eine Kommunikations-Schnittstelle zum Auslesen des Attributs aufweist. Vorzugsweise hat der ID-Token einen gesicherten Speicherbereich zur Speicherung des zumindest einen Attributs, um zu verhindern, dass das in dem Speicherbereich gespeicherte Attribut in unerlaubter Weise verändert oder ohne die dafür erforderliche Berechtigung ausgelesen wird.

Insbesondere kann es sich bei dem ID-Token um einen USB-Stick handeln oder ein Dokument, insbesondere ein Wert- oder Sicherheitsdokument. Unter einem "Dokument" werden erfindungsgemäß papierbasierte und/oder kunststoffbasierte
mente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Bei dem ID-Token kann es sich um einen Hardwaretoken handeln oder um einen Softtoken, wenn dieser kryptografisch an einen Hardwaretoken, das heißt beispielsweise an ein sogenanntes Secure Element, gebunden ist.

Insbesondere kann ein solcher kryptografisch an ein Secure Element gebundener Softtoken gemäß DE 10 2011 082 101, deren Offenbarungsgehalt voll umfänglich zum Offenbarungsgehalt der vorliegenden Patentanmeldung gemacht wird, erzeugt werden.

Unter einem "ID-Provider-Computersystem" wird hier ein Computersystem verstanden, welches dazu ausgebildet ist, zumindest ein Attribut aus dem ID-Token eines Nutzers auszulesen. Vorzugsweise wird das ID-Provider-Computersystem in einem sogenannten Trustcenter betrieben, um ein möglichst hohes Maß an Sicherheit zu schaffen.

Unter einem "Dienst-Computersystem" wird hier ein Computersystem verstanden, welches über eine Netzwerk-Schnittstelle zur Verbindung mit dem Netzwerk verfügt, sodass mithilfe eines Internetbrowsers oder eines anderen Anwendungsprogramms auf von dem Dienst-Computersystem gespeicherte oder generierte Internetseiten zugegriffen werden kann. Insbesondere kann es sich bei dem Dienst-Computersystem um einen Internetserver zur Verfügungstellung einer eCommerce- oder eGovernment-Anwendung handeln, insbesondere einen Onlineshop oder einen Behördenserver.

Unter einem "Nutzer-Computersystem" wird hier ein Computersystem verstanden, auf welches der Nutzer Zugriff hat. Hierbei kann es sich zum Beispiel um einen Personal Computer (PC), ein Tablet PC oder ein Mobilfunkgerät, insbesondere ein Smartphone, mit einem üblichen Internetbrowser, wie zum Beispiel Microsoft Internet Explorer, Safari, Google Chrome, Firefox oder einem anderen Anwendungsprogramm zum Zugriff auf das Dienst-Computersystem handeln. Das Nutzer-Computersystem hat eine Schnittstelle zur Verbindung mit dem Netzwerk, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem "Lesegerät" des Nutzer-Computersystems wird hier ein internes oder externes Peripheriegerät des Nutzer-Computersystems verstanden, welches mit dem Nutzer-Computersystem eine bauliche Einheit bilden kann oder als separate Komponente an das Nutzer-Computersystem angeschlossen ist. Das Lesegerät dient zum Aufbau einer lokalen Verbindung zwischen dem Nutzer-Computersystem und dem ID-Token. Insbesondere kann das Lesegerät als ein sogenannter Kartenleser ausgebildet sein.

Das Lesegerät kann einen ersten Lesegerättyp aufweisen, der die Eingabe von Authentifizierungsdaten des Nutzers unmittelbar in das Lesegerät ermöglicht. Hierzu kann das Lesegerät beispielsweise eine Tastatur aufweisen und/oder einen biometrischen Sensor, zum Beispiel zur Erfassung eines Fingerabdrucks des Nutzers. Alternativ hat das Lesegerät einen zweiten Lesegerättyp, der kein eigenes Nutzerinterface aufweist, und bei dem die Authentifizierungsdaten in das Nutzer-Computersystem, zum Beispiel über eine Tastatur oder einen biometrischen Sensor des Nutzer-Computersystems, eingegeben werden müssen.

Unter einer "Webseite" wird hier insbesondere eine html-Seite oder ein html-Dokument oder ein Dokument einer anderen Auszeichnungssprache ("mark-up language") verstanden, welches durch einen Internetbrowser wiedergebbar ist.

Unter einem "Web-Style Sheet" wird hier eine Datei verstanden, die insbesondere die Formatierung der Wiedergabe einer Webseite durch einen Internetbrowser beeinflusst, wie zum Beispiel Cascading Style Sheets (CSS).

Unter einem "Internetbrowser" wird hier ein üblicher Internetbrowser, wie zum Beispiel Microsoft Internet Explorer, Safari, Google Chrome, Firefox oder ein anderes html-fähiges Anwendungsprogramm zum Zugriff auf das Dienst-Computersystem verstanden, der eine Webseite wiedergeben kann.

Nach einer Ausführungsform der Erfindung handelt es sich bei der Anforderung, d.h. dem Request, des Dienst-Computersystems um einen SAML-Request und bei der Antwort, d.h. der Response, des ID-Provider-Computersystems hierauf um eine SAML-Response (vgl. Security Assertion Markup Language (SAML) V2.0 Technical Overview, OASIS, Committee Draft 02, 25. März 2008).

Nach Ausführungsformen der Erfindung wird der Request von dem Dienst-Computersystem über das Nutzer-Computersystem an das ID-Provider-Computersystem übertragen. Aufgrund des Empfangs des Request durch das Nutzer-Computersystem wird der weitere Ablauf zur Erzeugung der Response, einschließlich der Authentisierung des Nutzers und des ID-Provider-Computersystems, ausgelöst.

Nach einer Ausführungsform der Erfindung hat das ID-Provider-Computersystem ein Zertifikat, in dem die Leserechte für die Durchführung des Lesezugriffs spezifiziert sind.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Alternativ sind auch Zertifikate basierend auf zero-knowledge Kryptosystemen möglich. Beispielsweise kann das Zertifikat dem Standard X.509 oder einem anderen Standard entsprechen. Vorzugsweise handelt es sich bei dem Zertifikat um ein Card Verifiable Certificate (CVC).

Bei einem Zertifikat kann es sich um ein Berechtigungszertifikat handeln, in dem spezifiziert ist, für welches Attribut oder welche Attribute des Nutzers, die in dem geschützten Speicherbereich des ID-Tokens gespeichert sind, z.B. das Dienst-Computersystem zur Durchführung des Lesezugriffs berechtigt ist. Bei diesen Attributen kann es sich um persönliche Attribute des Nutzers handeln, wie zum Beispiel seinen Namen, Wohnort und sein Alter. Diese Attribute können in ihrer Kombination als Nutzererkennung verwendet werden, um auf die Bezahlinformation des registrierten Nutzers zuzugreifen. Das Berechtigungszertifikat beinhaltet eine Zertifikatsbeschreibung, die eine Beschreibung dieser Leserechte und eine Identifizierung des Betreibers des Dienst-Computersystems in Klartext beinhaltet.

Alternativ oder zusätzlich kann auch ein Pseudonym des Nutzers, welches zumindest temporär als Attribut des Nutzers von dem ID-Token gespeichert wird, als Nutzerkennung verwendet werden. Bei dem Pseudonym des Nutzers kann es sich um einen Identifikator handeln, welcher den Nutzer nur gegenüber dem anfragenden Dienst-Computersystem identifiziert, da der Identifikator von dem elektronischen Personalausweis aus dem privaten Schlüssel des Personalausweis und dem öffentlichen Schlüssel des anfragenden Dienst-Computersystems kryptografisch abgeleitet wird.

Nach Ausführungsformen der Erfindung ist auf dem Nutzer-Computersystem neben dem Internetbrowser ein weiteres Programm installiert. Der Request des Dienst-Computersystems beinhaltet eine lokale URL mithilfe derer das Internetbrowser das Programm aufruft. Beispielsweise läuft das Programm permanent auf dem Nutzer-Computersystem und überwacht einen bestimmten TCP-Port, wie zum Beispiel den Port 24727. Die lokale URL beinhaltet dann diesen von dem Programm überwachten Port, wie zum Beispiel http://127.0.0.1:24727/..., wobei die lokale URL hinter der Angabe der IP-Adresse mit der Portnummer Parameter beinhalten kann, welche von dem Internetbrowser an das Programm übergeben werden, insbesondere die Attributspezifizierung, das Berechtigungszertifikat des Dienst-Computersystems und die URL des ID-Provider-Computersystems, sodass das Programm dann eine Verbindung zu dem ID-Provider-Computersystem aufbauersten kann, um das Auslesen dieser Attribute von dem ID-Provider-Computersystem anzufordern.

Der Aufruf des Programms durch den Internetbrowser erfolgt also beispielsweise durch einen http-Request mit der lokalen URL. Auf diesen Request antwortet das Programm mit einer http-Response, die eine Webseite beinhaltet. Diese Webseite wird von dem Programm aufgrund des Aufrufs erzeugt und beinhaltet eine Beschreibung der gemäß dem Request auszulesenden Attribute sowie auch eine Beschreibung des Berechtigungszertifikats des Dienst-Computersystems sowie eine Eingabeanforderung an den Nutzer zur Eingabe von dessen Authentifizierungsdaten.
Diese Webseite, welche von dem Programm erzeugt worden ist, wird von dem Internetbrowser wiedergegeben, sodass der Nutzer die darin beinhalteten Informationen zur Kenntnis nehmen kann. Dabei ist von besonderem Vorteil, dass die Anzeige dieser Informationen in demselben Fenster ("Window") des Internetbrowsers erfolgt, in dem der Nutzer initial die Session zu dem Dienst-Computersystem aufgebaut hat. Es geht also aufgrund des Requests des Dienst-Computersystems kein weiteres Fenster auf dem Nutzer-Computersystem auf, was sonst zur Verwirrung des Nutzers führen könnte.

Nach einer Ausführungsform der Erfindung fragt das Programm vor der Erzeugung der Webseite den Lesegerättyp des Lesegeräts ab. Hierzu sendet das Programm ein Kommando an das Lesegerät, aufgrund dessen das Lesegerät mit einem Signal antwortet, welches das Vorliegen des ersten oder des zweiten Lesegerättyps anzeigt. Wenn der erste Lesegerättyp vorliegt, so kann der Nutzer seine Authentifizierungsdaten unmittelbar in das Lesegerät eingeben. Wenn hingegen der zweite Lesegerättyp vorliegt, so erzeugt das Programm die Webseite mit einem Eingabefeld zur Eingabe der Authentifizierungsdaten des Nutzers über das Nutzer-Computersystem.

In der Webseite kann eine Zuordnung des Eingabefelds zu der lokalen URL gespeichert sein, sodass aufgrund der Eingabe der Authentifizierungsdaten in dieses Eingabefeld der Internetbrowser erneut einen http-Request an das Programm richtet, welcher die eingegebenen Authentifizierungsdaten beinhaltet. Das Programm führt dann über die lokale Verbindung mit dem ID-Token ein Authentifizierungsprotokoll auf der Basis der eingegebenen Authentifizierungsdaten durch, um die Authentifizierungsdaten zu verifizieren. Hierbei kann es sich zum Beispiel um das PACE-Protokoll handeln.

Nach einer Ausführungsform der Erfindung wird zusammen mit dem Request des Dienst-Computersystems ein Web-Style Sheet übertragen, welches von dem Internetbrowser an das Programm weitergeleitet wird, sodass das Programm die Webseite zusammen mit diesem Web-Style Sheet an den Internetbrowser übermittelt. Der Internetbrowser gibt dann die von dem Programm generierte Webseite gemäß dem Web-Style Sheet wieder. Dies hat den Vorteil, dass das sogenannte "Look and Feel" der angezeigten Webseiten unverändert bleiben kann, wenn die von dem Programm erzeugte Webseite zur Anzeige kommt.

Wird beispielsweise die erste Session zu einem Finanzinstitut aufgebaut, so haben die entsprechenden Webseiten des Finanzinstituts im Allgemeinen eine bestimmte Formatierung und ein bestimmtes Layout. Dieses wird für die von dem Programm erzeugte Webseite beibehalten, indem zusammen mit dem Request des Dienst-Computersystems, das heißt hier des Finanzinstituts, ein Web-Style Sheet mitgesendet wird. Auch aufgrund dessen kann eine Verwirrung oder Irritation des Nutzers bei der Interaktion mit dem Nutzer-Computersystem, insbesondere auch im Zusammenhang mit der Authentifizierung des Nutzers, vermieden werden.

Unter einer "lokalen URL" wird hier eine URL verstanden, mithilfe derer der Internetbrowser des Nutzer-Computersystems ein auf dem Nutzer-Computersystem installiertes Programm starten kann. Diese lokale URL kann durch das Dienst-Computersystem aufgrund der Transaktionsanforderung des Nutzer-Computersystems erzeugt und zusammen mit dem Request von dem Dienst-Computersystem an den Internetbrowser des Nutzer-Computersystems übertragen werden. Eine solche Erzeugung einer geeigneten lokalen URL durch einen entfernten Server ist an sich bekannt aus der Patentanmeldung DE 102011084728.6 (Bund 211.10DE) deren Offenbarungsgehalt hiermit vollumfänglich zum Offenbarungsgehalt der vorliegenden Patentanmeldung gemacht wird.

Ausführungsformen der Erfindung sind besonders vorteilhaft, da ein universell für eCommerce- und eGovernment-Anwendungen geeignetes computerimplementiertes Bezahlverfahren geschaffen wird, welches gleichzeitig flexibel, bequem in der Handhabung und sicher ist. Dies wird insbesondere dadurch ermöglicht, dass das Bezahlverfahren auf einem ID-Token basiert, wobei Voraussetzung für die Durchführung eines Bezahlvorgangs sowohl die Authentifizierung des Nutzers gegenüber dem ID-Token als auch die Authentifizierung des ID-Provider-Computersystems gegenüber dem ID-Token ist.

Nach Ausführungsformen der Erfindung wird zunächst eine erste Session zwischen dem Internetbrowser des Nutzer-Computersystems und dem Dienst-Computersystem über das Internet aufgebaut, wobei es sich bei der ersten Session um eine http-Session oder eine https-Session handeln kann. Der Nutzer kann eine Transaktionsanforderung in den Internetbrowser eingeben, beispielsweise zur Veranlassung eines Bezahlvorgangs. Beispielsweise hat der Nutzer zuvor über das Dienst-Computersystem eine Ware bestellt und möchte diese bestellte Ware bezahlen, wozu der Nutzer die entsprechende Transaktionsanforderung in den Internetbrowser eingibt, welche an das Dienst-Computersystem über die erste Session übertragen wird.

Das Dienst-Computersystem erzeugt daraufhin eine Anforderung, d.h. einen Request eines Request-Response Protokolls. Der Request kann eine vordefinierte oder standardisierte Struktur haben. Beispielsweise kann der Request textbasiert sein, eine XML, ASN.1 oder eine binär-Struktur aufweisen oder als SAML-Request ausgebildet sein. Der Request, beispielsweise also der SAML-Request, beinhaltet eine Attributspezifikation, welche die aus dem ID-Token für die Durchführung der Transaktion auszulesenden Attribute spezifiziert. Hierbei kann es sich um Attribute handeln, welche den Nutzer, der dem ID-Token zugeordnet ist, identifizieren und/oder die eine Bezahlinformation angeben, wie zum Beispiel eine Kontoverbindung oder Kreditkarteninformationen, und/oder Attribute, welche den ID-Token selbst betreffen, wie zum Beispiel dessen Gültigkeitsdauer, Ausstellungsdatum und/oder die ausstellende Organisation oder Behörde.

Insbesondere kann die Attributspezifikation das Geburtsdatum des Nutzers beinhalten, falls zum Beispiel die Volljährigkeit des Nutzers als Voraussetzung für die Durchführung der Transaktion von dem Dienst-Computersystem zu prüfen ist.

Der Request beinhaltet dagegen keine oder keine vollständigen Transaktionsdaten zur Spezifizierung der Transaktion, das heißt zum Beispiel einen Bezahlbetrag sowie Kontoinformationen, insbesondere die Kontoverbindung des Dienst-Computersystems, auf welche die Zahlung zu leisten ist. Die Transaktionsdaten werden ganz oder teilweise zusätzlich zu dem Request von dem Dienst-Computersystem an das Nutzer-Computersystem übertragen und/oder die Transaktionsdaten werden zumindest teilweise von dem Nutzer in das Nutzer-Computersystem eingegeben.

Der Request kann ein Chiffrat der Transaktionsdaten beinhalten. Alternativ wird das Chiffrat von dem Nutzer-Computersystem erzeugt.

Ferner beinhaltet der Request einen Uniform Ressource Locator (URL) des ID-Provider-Computersystems, welches die Attribute aus dem ID-Token auslesen soll, sowie eine URL des Dienst-Computersystems zur Angabe eines Empfängers für die Response, die aufgrund der Request von dem ID-Provider-Computersystem zu generieren ist.

Das Dienst-Computersystem erzeugt für den Request eine Kennung, die den Request eindeutig identifiziert, wie z.B. einen globally unique identifier (GUID). Der Request beinhaltet diese Kennung.

Der Request wird von dem Dienst-Computersystem signiert, und zwar mithilfe eines privaten Schlüssels eines kryptografischen Schlüsselpaars, welches dem Dienst-Computersystem zugeordnet ist.

Aufgrund der Transaktionsanforderung wird über die erste Session der Request von dem Dienst-Computersystem an das Nutzer-Computersystem übertragen.

Das Dienst-Computersystem kann aus den Transaktionsdaten mithilfe einer Einwegfunktion das Chiffrat ableiten. Bei der Einwegfunktion kann es sich um eine Hash-Funktion, wie zum Beispiel Message-Digest-Algorithm 5 (MD5) oder einen Secure Hash Algorithm (SHA) handeln. Wesentlich ist dabei, dass die kryptografische Ableitung des Chiffrats mithilfe einer Einwegfunktion nicht reversibel ist, sodass aus dem Chiffrat nicht auf die Transaktionsdaten rückgeschlossen werden kann. Das Chiffrat der Transaktionsdaten können als Teil des Request, oder separat davon von dem Dienst-Computersystem über die erste Session an das Nutzer-Computersystem übertragen werden. Die Transaktionsdaten selbst sind dagegen jedenfalls nicht vollständig oder gar nicht in dem Request beinhaltet und können separat von dem Request über die erste Session von dem Dienst-Computersystem an das Nutzer-Computersystem übertragen werden oder zumindest teilweise von dem Nutzer in das Nutzer-Computersystem eingegeben werden.

Alternativ kann die Ableitung des Chiffrats der Transaktionsdaten auch durch das Nutzer-Computersystem erfolgen. Hierzu empfängt das Nutzer-Computersystem die Transaktionsdaten von dem Dienst-Computersystem über die erste Session und/oder durch unmittelbare Eingabe in das Nutzer-Computersystem durch den Nutzer und leitet dann das Chiffrat mithilfe der Einwegfunktion ab.

Anschließend wird eine zweite Session von dem Internetbrowser zu dem ID-Provider-Computersystem über das Netzwerk aufgebaut.

Der Aufbau der zweiten Session erfolgt durch Aufruf der URL des ID-Provider-Computersystems, welche in dem Request beinhaltet ist. Die zweite Session wird dabei als geschützte Kommunikationsverbindung aufgebaut, und zwar mit einer verschlüsselten Transportschicht, das heißt mit Transport Layer Security (TLS), die auch als Secure Sockets Layer (SSL) bezeichnet wird, insbesondere als https-Session.

Über die zweite Session wird das Chiffrat der Transaktionsdaten und der Request von dem Nutzer-Computersystem an das ID-Provider-Computersystem weitergeleitet. Je nach Ausführungsform kann dies so erfolgen, dass das Chiffrat der Transaktionsdaten in dem Request beinhaltet ist, sodass es von dem Dienst-Computersystem signiert ist oder dass das Chiffrat zusätzlich zu dem Request über die zweite Session übertragen wird, was insbesondere dann der Fall ist, wenn das Chiffrat von dem Nutzer-Computersystem erzeugt worden ist.

Nach Ausführungsformen der Erfindung erzeugt das ID-Provider-Computersystem aufgrund des Empfangs des Requests über die zweite Session einen Identifikator für eine noch aufzubauende dritte Session, d.h. eine sog. Session-ID. Das ID-Provider-Computersystem speichert den Request sowie das zusammen mit dem Request über die zweite Session empfangene Chiffrat mit der Session-ID für die dritte Session.

Das ID-Provider-Computersystem sendet dann eine Nachricht über die zweite Session, welche eine logische Adresse des ID-Provider-Computersystems und beispielsweise auch die Session-ID der dritten Session beinhaltet. Von dieser logischen Adresse kann der Internetbrowser zu einem späteren Zeitpunkt die Response auf den zuvor weitergeleiteten Request abrufen. Bei der logischen Adresse kann es sich um einen uniform resource locator (URL) handeln, von dem die Response abrufbar ist.

Anschließend wird die dritte Session auf dem Application Layer zwischen einem Programm des Nutzer-Computersystems und dem ID-Provider-Computersystem aufgebaut, und zwar über den gesicherten Transportlayer der zweiten Session. Bei dem Programm handelt es sich um ein von dem Internetbrowser verschiedenes Programm.

Das ID-Provider-Computersystem überträgt dann diejenigen Informationen über die dritte Session an das Programm, die für das Auslesen des oder der Attribute aus dem ID-Token benötigt werden. Diese Informationen beinhalten zumindest ein Zertifikat des ID-Provider-Computersystems, welches eine Angabe von Leserechten des ID-Provider-Computersystems zum Lesen von einem oder mehrerer Attribute beinhaltet sowie die Attributspezifikation, d.h. die Angabe derjenigen Attribute, die Ausgelesen werden sollen. Zusätzlich überträgt das ID-Provider-Computersystem das Chiffrat der Transaktionsdaten z.B. über die dritte Session an das Programm.

Das Programm des Nutzer-Computersystems prüft dann, ob die in dem Zertifikat angegebenen Leserechte ausreichend sind, um einen Lesezugriff des ID-Provider-Computersystems auf das oder die gemäß der Attributspezifikation des Requests zu lesenden Attribute zuzulassen. Wenn die Leserechte des ID-Provider-Computersystems ausreichend sind, werden die folgenden weiteren Schritte durchgeführt:
a) Das Programm des Nutzer-Computersystems prüft, ob die Transaktionsdaten und das von dem ID-Provider-Computersystem über die dritte Session empfangene Chiffrat übereinstimmen. Wenn dies der Fall ist, werden die Attributspezifikation der von dem ID-Provider-Computersystem aus dem ID-Token auszulesenden Attribute sowie die Transaktionsdaten zum Beispiel auf einem Bildschirm des Nutzer-Computersystems angezeigt und der Nutzer wird zur Eingabe seiner Bestätigung aufgefordert. Unter der Voraussetzung, dass der Nutzer seine Bestätigung eingegeben hat, werden die weiteren Schritte durchgeführt; ansonsten erfolgt ein Abbruch des Vorgangs.
b) Es wird dann eine lokale Verbindung zwischen dem Lesegerät des Nutzer-Computersystems und dem ID-Token aufgebaut. Bei einem ID-Token mit einer kontaktbehafteten Schnittstelle, beispielsweise einer Chipkarten-Schnittstelle, kann dies durch Einführen des ID-Tokens in das Lesegerät erfolgen. Bei einem ID-Token mit einer kontaktlosen Schnittstelle, wie zum Beispiel einer RFID oder einen NFC-Schnittstelle, kann dies dadurch erfolgen, dass der ID-Token auf das Lesegerät gelegt wird.
c) Der Nutzer authentifiziert sich gegenüber dem ID-Token, beispielsweise durch Eingabe seiner Personal Identification Number (PIN) oder durch Eingabe einer anderen Information, wie zum Beispiel der Erfassung eines biometrischen Merkmals des Nutzers. Bei der Authentifizierung des Nutzers gegenüber dem ID-Token wird ein Session Key vereinbart. Insbesondere kann die Vereinbarung eines Session Keys mithilfe eines Diffie-Hellman-Protokolls erfolgen.
d) Anschließend wird eine vierte Session auf dem Application Layer aufgebaut, und zwar zwischen einem Programm des ID-Tokens und dem ID-Provider-Computersystem, wobei diese vierte Session über die lokale Verbindung und die dritte Session verläuft und auf dem Application Layer eine zusätzliche Ende-zu-Ende Verschlüsselung mithilfe des in Schritt c vereinbarten Session Keys erfolgt.
e) Über die vierte Session erfolgt dann eine gegenseitige kryptografische Authentifizierung des ID-Tokens und des ID-Provider-Computersystems, beispielsweise mithilfe eines Challenge-Response-Protokolls. In die Authentifizierung des ID-Provider-Computersystems gegenüber dem ID-Token geht dabei das Chiffrat der Transaktionsdaten ein. Beispielsweise erfolgt dies so, dass eine Challenge des ID-Tokens, wie zum Beispiel eine Nounce, insbesondere eine Zufallszahl, seitens des ID-Provider-Computersystems mit dem Chiffrat der Transaktionsdaten kombiniert, wie zum Beispiel konkateniert wird. Die Kombination aus Challenge und Chiffrat wird dann von dem ID-Provider-Computersystem signiert und diese Signatur wird über die vierte Session an den ID-Token übertragen. Der ID-Token verifiziert dann die Signatur des ID-Provider-Computersystems, wobei das ID-Provider-Computersystem als authentifiziert gilt, wenn die Signatur gültig ist. Zusätzlich prüft das Programm des Nutzer-Computersystems, ob das von dem ID-Token im Rahmen der Authentifizierung empfangene Chiffrat der Transaktionsdaten mit den Transaktionsdaten der angeforderten Transaktion übereinstimmt. Dies ist eine zusätzliche Voraussetzung dafür, dass die Attribute in dem nachfolgenden Schritt f) tatsächlich aus dem ID-Token gelesen werden dürfen, da nur dann sichergestellt ist, dass die Leseanforderung des ID-Provider-Computersystems zum Lesen der Attribute gemäß der Attributspezifikation aufgrund der Transaktionsanforderung des Nutzers erfolgt.
f) Das oder die Attribute gemäß der Attributspezifikation, welche das ID-Provider-Computersystem mit dem Request empfangen hat, werden nun über die vierte Session von dem ID-Provider-Computersystem aus dem ID-Token ausgelesen. Dies setzt die erfolgreiche Authentifizierung des Nutzers in Schritt c sowie die erfolgreiche gegenseitige Authentifizierung des ID-Tokens und des ID-Provider-Computersystems in Schritt e) voraus und erfolgt verschlüsselt über die vierte Session, und zwar mit einer zusätzlichen Ende-zu-Ende Verschlüsselung z.B. mithilfe des in Schritt c) vereinbarten Session Keys auf dem Application Layer, sodass ein Maximum an Sicherheit und Vertrauenswürdigkeit hinsichtlich des oder der ausgelesenen Attribute gegeben ist.

Das ID-Provider-Computersystem erzeugt dann eine Response, beispielsweise eine SAML-Response, die das oder die ausgelesenen Attribute sowie das Chiffrat der Transaktionsdaten beinhaltet. Die SAML-Response wird von dem ID-Provider-Computersystem signiert.

Die Response wird dann von dem ID-Provider-Computersystem zu dem Dienst-Computersystem übertragen, beispielsweise über das Nutzer-Computersystem oder eine andere Netzwerkverbindung. Das Dienst-Computersystem überprüft zur Verifizierung der Response deren Signatur. Aufgrund des Empfangs der für die angeforderte Transaktion benötigten Attribute aus dem ID-Token des Nutzers wird die Transaktion dann von dem Dienst-Computersystem ausgeführt, das heißt beispielsweise ein Bezahlvorgang ausgelöst und/oder ein bestelltes Produkt geliefert.

Ausführungsformen der Erfindung sind besonders vorteilhaft, da das Auslesen der Attribute aus dem ID-Token durch das ID-Provider-Computersystem die Authentizität der ausgelesenen Attribute gewährleistet und gleichzeitig die Zustimmung des Nutzers zu dem Auslesen der Attribute für den Zweck der Durchführung einer bestimmten von dem Nutzer ausdrücklich genehmigten Transaktion erforderlich ist. Mit anderen Worten besteht für den Nutzer die Sicherheit, dass er das Auslesen der Attribute durch das ID-Provider-Computersystem nur für den Zweck der zuvor angeforderten Transaktion zulässt, ohne dass das ID-Provider-Computersystem Kenntnis von den vollständigen Transaktionsdaten haben muss. Letzteres ist besonders vorteilhaft im Hinblick auf den Schutz der Privatsphäre, da es auf diese Art und Weise bereits technisch ausgeschlossen wird, dass durch das ID-Provider-Computersystem eine Historie der von dem Nutzer vorgenommenen Transaktionen aufgezeichnet wird.

Ein weiterer Vorteil ist, dass der ID-Token die ausgelesenen Attribute nicht signieren muss. Zwar hat beispielsweise der neue elektronische Personalausweis der Bundesrepublik Deutschland eine Signaturfunktion. Die Nutzung dieser Signaturfunktion erfordert allerdings, dass kryptografisches Schlüsselmaterial für die Nutzung der Signaturfunktion in dem elektronischen Personalausweis vorhanden sein muss, was einen entsprechenden technischen und Kostenaufwand bedeutet, welcher nicht von allen Nutzern akzeptiert wird. Insbesondere wird durch die Erfindung auch für eine nur gelegentliche Nutzung des ID-Tokens für die Durchführung von Transaktionen eine effiziente und zugleich sehr sichere Anwendung geschaffen.

Nach Ausführungsformen der Erfindung wird aus dem ID-Token durch das ID-Provider-Computersystem nur ein Pseudonym des Nutzers ausgelesen. Nach Empfang der Response von dem ID-Provider-Computersystem verwendet das Dienst-Computersystem das Pseudonym des Nutzers als Zugriffsschlüssel zum Zugriff auf ein Nutzerprofil dieses Nutzers, um die in einer Datenbank, zum Beispiel des Dienst-Computersystems gespeicherten Attribute des Nutzers auszulesen, wie zum Beispiel dessen Name, Adresse und Kontoverbindung.

Nach einer Ausführungsform der Erfindung beinhaltet die Response des ID-Provider-Computersystems das Chiffrat der Transaktionsdaten, wobei die Response von dem ID-Provider-Computersystem signiert ist. Das Dienst-Computersystem ordnet die von dem ID-Provider-Computersystem empfangene Response der zuvor von dem Nutzer empfangenen Transaktionsanforderung zu, indem das Chiffrat der Transaktionsdaten der Transaktionsanforderung mit dem in der Response beinhalteten Chiffrat abgeglichen wird; wenn beide Chiffrate miteinander übereinstimmen, so bedeutet dies, dass sich die empfangene Response auf die betreffende Transaktionsanforderung des Nutzers bezieht.

Nach einer Ausführungsform der Erfindung hat das Nutzer-Computersystem ein Lesegerät eines ersten Lesegerättyps oder einer zweiten Lesegerättyps. Bei dem ersten Lesegerättyp kann es sich um einen Kartenleser mit Tastatur und auch einem Display, wie zum Beispiel einen sogenannten Klasse 2- oder Klasse 3-Kartenleser, handeln. Das Programm des Nutzer-Computersystems übermittelt die Transaktionsdaten vor der Nutzer-Authentifizierung an den Kartenleser. Der Kartenleser zeigt die Transaktionsdaten an, sodass sie von dem Benutzer überprüft werden können. Anschließend kann der Nutzer seine Authentifizierungsdaten, wie zum Beispiel seine PIN, in den Kartenleser eingeben, um hierdurch (i) die Transaktionsdaten zu bestätigen und sich (ii) gegenüber dem ID-Token zu authentifizieren.

Nach einer Ausführungsform der Erfindung stellt der Kartenleser bei der TerminalAuthentifizierung des ID-Provider-Computersystems gegenüber dem ID-Token sicher, dass das korrekte Chiffrat der Transaktionsdaten von dem ID-Provider-Computersystem an den ID-Token geschickt wird, indem der Kartenleser die zuvor von dem Programm des Nutzer-Computersystems empfangenen Transaktionsdaten mit dem Chiffrat der Transaktionsdaten, welche der Kartenleser von dem ID-Server-Computersystem empfangen hat, abgleicht, beispielsweise indem der Kartenleser aus den Transaktionsdaten seinerseits deren Chiffrat bildet, um dieses Chiffrat mit dem von dem ID-Server-Computersystem empfangenen Chiffrat auf Übereinstimmung zu prüfen.

Nach einer weiteren Ausführungsform der Erfindung werden die Transaktionsdaten von dem Programm des Nutzer-Computersystems an das ID-Token über den Kartenleser übertragen und dort temporär gespeichert. Vor der Authentifizierung des Nutzers gegenüber dem ID-Token werden die Transaktionsdaten auf einem Display des ID-Tokens angezeigt. Durch nachfolgende Eingabe seiner Authentisierungsdaten bestätigt der Nutzer wiederum i) die Transaktionsdaten und ii) authentifiziert sich gleichzeitig gegenüber dem ID-Token.

Nach einer Ausführungsform der Erfindung prüft der ID-Token die Korrektheit des Chiffrats, welches es im Rahmen der Terminalauthentifizierung von dem ID-Server-Computersystem empfängt, indem das ID-Token die von dem Programm des Nutzer-Computersystems empfangenen Transaktionsdaten mithilfe der Einwegfunktion chiffriert und das daraus resultierende Chiffrat mit dem von dem ID-Server-Computersystem empfangene Chiffrat auf Übereinstimmung prüft. Falls keine Übereinstimmung vorliegt, wird der Vorgang an dieser Stelle abgebrochen und es kommt zu einer Fehlermeldung. Dadurch ist ein besonders wirksamer Schutz gegen Schadsoftware, insbesondere sog. Trojaner, gegeben, da die Prüfung auf dem ID-Token selbst erfolgt.

Nach einer Ausführungsform der Erfindung sendet das ID-Provider-Computersystem die Response über das Programm des Nutzer-Computersystems an das Dienst-Computersystem, das heißt über die Session 2 oder 3 und die Session 1. Dies hat den Vorteil, dass das Dienst-Computersystem keinen Zustand über die ausgelösten Transaktionen halten muss.

Im Weiteren werden Ausführungsformen der Erfindung mit Bezugnahme auf die Zeichnungen näher erläutert.

Es zeigen:
- Fig. 1: ein Blockdiagramm einer Ausführungsform eines erfindungsgemäßen ID-Tokens,
- Fig. 2: eine Anordnung einer Ausführungsform eines erfindungsgemäßen Computersystems zur Durchführung einer Ausführungsform eines erfindungsgemäßen Verfahrens.

Elemente der Ausführungsformen der nachfolgenden Figuren, die zueinander identisch sind oder einander entsprechen, sind jeweils mit denselben Bezugszeichen gekennzeichnet.

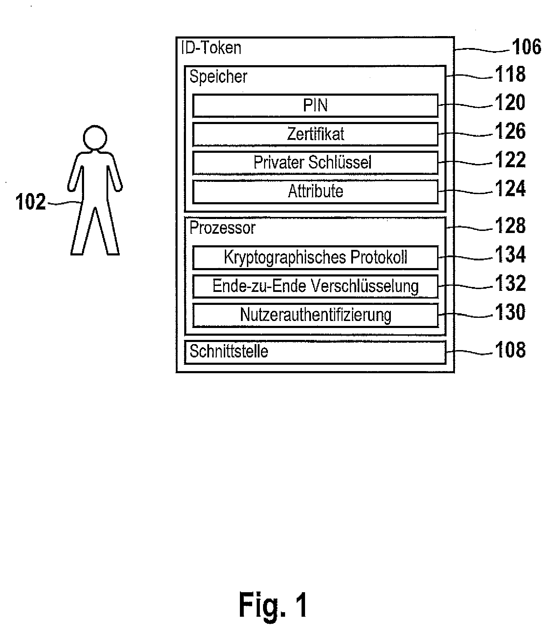

Die Figur 1 zeigt einen ID-Token 106, bei dem es sich zum Beispiel um einen elektronischen Personalausweis handeln kann.

Der geschützte Speicherbereich 120 des ID-Token 106 dient zur Speicherung eines Referenzwerts, der für die Authentifizierung eines Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung in den ID-Token 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines ID-Provider-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d.h. auch der ID-Token 106 muss sich dann gegenüber dem ID-Provider-Computersystem 136 nach demselben oder einem anderen kryptographischen Protokoll authentifizieren.

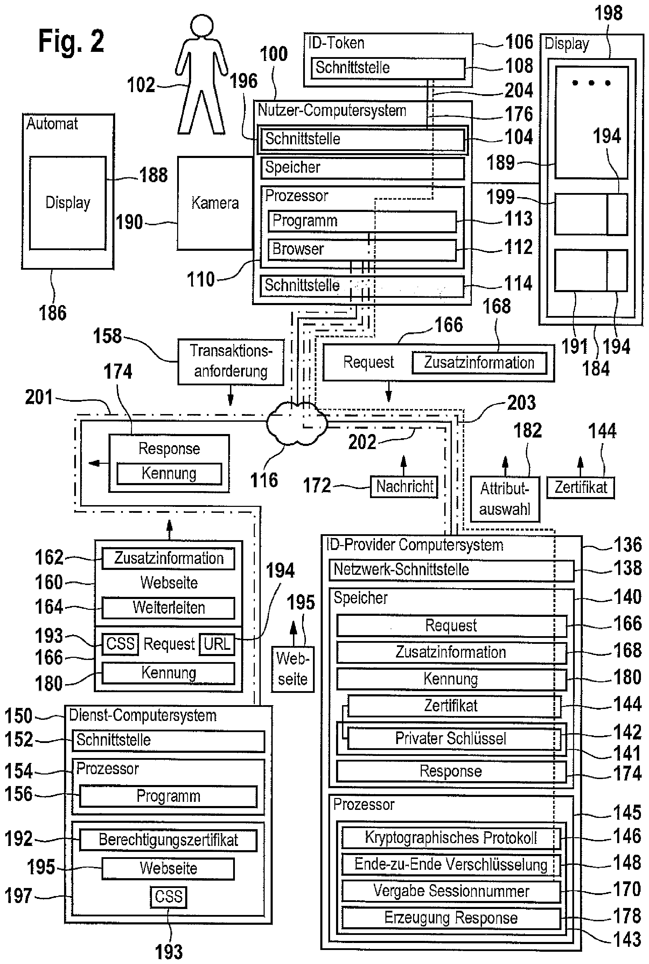

Die Programminstruktionen 132 dienen zur Ende-zu-Ende-Verschlüsselung von zwischen dem ID-Token 106 und einem ID-Provider-Computersystem 136 (vgl. Fig. 2) übertragenen Daten, zumindest aber der von dem ID-Provider-Computersystem 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird.

Der ID-Token 106 hat eine Schnittstelle 108 zur Kommunikation mit einer entsprechenden Schnittstelle 104 des Lesegeräts eines Nutzer-Computersystems 100 (vergleiche Figur 2). Die Schnittstelle kann kontaktlos oder kontaktbehaftet ausgebildet sein. Insbesondere kann es sich um eine RFID- oder um eine NFC-Kommunikationsschnittstelle handeln.

Der Zugriff auf den geschützten Speicherbereich 124 zum Lesen einer oder mehrerer der Attribute kann nur über den Prozessor 128 des ID-Tokens 106 erfolgen, da der geschützte Speicherbereich 124 sowie auch die weiteren geschützten Speicherbereiche 120, 122 nicht unmittelbar zum Beispie! über ein Bussystem mit der Schnittstelle 108 verbunden sind, sondern nur mit dem Prozessor 128, das heißt ein Zugriff über die Schnittstelle 108 unmittelbar auf den geschützten Speicherbereich 124 ist bereits schaltungstechnisch ausgeschlossen. Allein der Prozessor 128 kann also lesend auf den geschützten Speicherbereich 124 zugreifen, um dann gegebenenfalls die ausgelesenen Attribute über die Schnittstelle 108 auszugeben.

Die Figur 2 zeigt ein Nutzer-Computersystem 100 des Nutzers 102. Bei dem Nutzer-Computersystem 100 kann es sich um einen Personal-Computer (PC), einen tragbaren Computer, wie zum Beispiel einen Laptop, Notebook oder Tablet-Computer, ein mobiles Telekommunikationsgerät, insbesondere ein Smartphone handeln.

Das Nutzer-Computersystem hat zumindest einen Prozessor 110 zur Ausführung eines Internetbrowsers 112. Der Internetbrowser 112 ist dazu ausgebildet, über eine Netzwerk-Schnittstelle 114 des Nutzer-Computersystems 100 über ein Netzwerk 116 zu kommunizieren.

Der Prozessor 110 dient zur Ausführung eines weiteren Programms 113, bei dem es sich um ein von dem Internetbrowser 112 separates Programm handelt.

Bei dem Netzwerk kann es sich um ein Computernetzwerk, wie zum Beispiel das Internet, handeln. Insbesondere kann das Netzwerk 116 auch ein Mobilfunknetzwerk beinhalten.

Das ID-Provider-Computersystem 136 hat eine Netzwerk-Schnittstelle 138 zur Kommunikation über das Netzwerk 116. Das ID-Provider-Computersystem 136 hat ferner einen Speicher 140 mit einem geschützten Speicherbereich 141, in dem ein privater Schlüssel 142 des ID-Provider-Computersystems 136 gespeichert ist, sowie auch das entsprechende Zertifikat 144. Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Entgegennahme einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Benutzer 102 beispielsweise online ein Mobiltelefon oder dergleichen erwerben kann. Ferner kann das Dienst-Computersystem 150 auch zur Lieferung von digitalen Inhalten ausgebildet sein, beispielsweise für den Download von Musik- und/oder Videodaten.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seinen Auftrag oder seine Bestellung eingeben kann, sowie Transaktionen durchgeführt.

Je nach der Art des beauftragten oder bestellten Produkts oder der Dienstleistung muss das Dienst-Computersystem 150 ein oder mehrere Attribute des Nutzers 102 und/oder dessen ID-Token 106 anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt.

Zur Durchführung einer elektronischen Transaktion kann wie folgt vorgegangen werden:
- Der Nutzer 102 startet den Internetbrowser 112 des Nutzer-Computersystems. Der Nutzer 102 gibt eine URL des Dienst-Computersystems 150 in den Internetbrowser 112 ein, so dass daraufhin eine erste Session 201 zwischen dem Internetbrowser 112 und dem Dienst-Computersystem 150 über das Netzwerk 116 aufgebaut wird und eine Webseite 195 des Dienst-Computersystem 150 durch den Internetbrowser 112 auf einem Display 184 des Nutzer-Computersystems 100 widergegeben wird. Die Webseite 195 sowie ggf. das Web-Sylesheet 193 und das Berechtigungszertifikat 192 werden beispielsweise zumindest temporär in einem Speicher 197 des Dienst-Computersystems 150 gespeichert.
   Der Nutzer kann dann über die erste Session 201 einen von dem Dienst-Computersystem 150 angebotenen Dienst anfordern, wie zum Beispiel ein Produkt bestellen, Daten zum Download anfordern oder die Durchführung einer finanziellen Transaktion anfordern. Hierzu wird von dem Internetbrowser 112 eine entsprechende Transaktionsanforderung 158 an das Dienst-Computersystem 150 gesendet, die diese Anforderung signalisiert.
- Das Dienst-Computersystem empfängt also von dem Internetbrowser 112 über die erste Session eine Transaktionsanforderung 158 des Nutzers 102, die Transaktionsdaten beinhaltet.
- Aufgrund des Empfangs der Transaktionsforderung 158 über die erste Session 201 erzeugt das Dienst-Computersystem 150 einen Request 166. Der Request 166 beinhaltet (i) eine Attributspezifikation, der aus dem ID-Token für die Durchführung der Transaktion auszulesenden Attribute. Bei diesen Attributen kann es sich um persönliche Angaben zu dem Nutzer 102 und/oder Daten betreffend den ID-Token 106 selbst oder ein Pseudonym des Nutzers 102, welches von dem ID-Token 106 verfügbar ist, handeln. Der Request beinhaltet ferner (ii) die Transaktionsdaten zur Spezifizierung der Transaktion, wie zum Beispiel einen Bezahlbetrag, der für den Kauf des bestellten Produkts oder die Durchführung des bestellten Dienstes an das Dienst-Computersystem 150 oder einen Dritten zu entrichten ist, und/oder andere Transaktionsdaten, die die durchzuführende Transaktion spezifizieren. Der Request beinhaltet ferner (iii) eine Kennung 180 des Requests, beispielsweise eine GUID, die für das sogenannte Binding des Requests und einer daraufhin empfangenen Response 174 erforderlich ist. Für die Erzeugung der Kennung kann das Dienst-Computersystem 150 einen GUID-Generator aufweisen. Die Request beinhaltet ferner (iv) eine URL des ID-Provider-Computersystems 136 (v) eine URL des Dienst-Computersystems 150 selbst und ein Chiffrat der Transaktionsdaten, wobei das Dienst-Computersystem 150 das Chiffrat mit Hilfe einer vorgegebenen Einwegfunktion, z.B. einer HASH-Funktion ableitet. Der Request 166 beinhaltet ferner ein Berechtigungszertifikat 192 des Dienst-Computersystems 150 sowie eine lokale URL 194 mit Hilfe derer der Internetbrowser 112 des Nutzer-Computersystems 100 das Programm 113 aufrufen kann.
- Der Request wird von dem Dienst-Computersystem 150 signiert, nämlich mit Hilfe eines privaten Schlüssels des Dienst-Computersystems 150. Bei dem Request 166 kann es sich um einen SAML-Request oder einen anderen Request eines Request-Response-Protokolls handeln.
- Als Antwort auf die Transaktionsanforderung 158 sendet dann das Dienst-Computersystem 150 eine Webseite 160 über die erste Session 201 an das Nutzer-Computersystem 100, wobei die Webseite 160 ein Eingabefeld 162 zur Eingabe einer Zusatzinformation durch den Nutzer 102 für die Transaktion aufweisen kann und ferner ein Eingabeelement 164, das der Nutzer 102 zum Beispiel durch Anklicken selektieren kann, wenn die Webseite 160 durch den Internetbrowser 112 wiedergegeben wird, um die Weiterleitung des Request 166 zu erlauben. Zusammen mit der Webseite 160 wird auch der Request 166 über die erste Session 201 zu dem Internetbrowser 112 übertragen.
- Aufgrund des Empfangs der Webseite 160 und des Requests 166 wird die Webseite 160 durch den Internetbrowser 112 wiedergegeben, so dass der Nutzer 102 ggf. die Zusatzinformation in das Eingabefeld 162 eingeben kann. Beispielsweise handelt es sich bei der Zusatzinformation um ergänzende Transaktionsdaten, wie z.B. eine Kontoverbindung des Nutzers 102, eine Kreditkartennummer des Nutzers 102 oder andere ergänzende Transaktionsdaten und/oder um eine Authentifizierungsinformation zum Nachweis der Berechtigung des Nutzers 102 für die Durchführung der Transaktion, wozu der Nutzer 102 beispielsweise ein One-Time-Passwort (OTP) in das Eingabefeld 162 eingibt. Vorzugsweise wird die von dem Nutzer 102 eingegebene Zusatzinformation 168 mit dem öffentlichen Schlüssel des Dienst-Computersystems 150 durch das Nutzer-Computersystem 100 verschlüsselt, um ein entsprechendes Chiffrat zu erhalten.
- Mithilfe der lokalen URL 194 ruft der Internetbrowser 112 das Programm 113 auf und übergibt dem Programm 113 hiermit verschiedene Parameter, insbesondere die Attributspezifikation, das Berechtigungszertifikat 192 und die URL des ID-Provider-Computersystems 136, welches die Attribute aus dem ID-Token 106 des Nutzers 102 auslesen soll. Je nach Ausführungsform kann auch die Zusatzinformation von dem Internetbrowser 112 an das Programm 113 übergeben werden.
- Das Programm 113 stellt dann den Typ des Lesegeräts 196 fest, welches an das Nutzer-Computersystem 100 angeschlossen ist. Hierzu sendet das Programm 113 beispielsweise ein Chipkartenkommando an das Lesegerät 196, worauf das Lesegerät 196 ein Signal abgibt, weiches dem Programm 113 gegenüber den Typ des Lesegeräts 196 signalisiert, also ob es sich um einen ersten Lesegerättyp handelt, der die Eingabe von Authentifizierungsinformation des Nutzers unmittelbar in das Lesegerät selbst zulässt, oder um einen zweiten Lesegerättyp, für den das nicht der Fall ist.
- Das Programm 113 erzeugt dann eine Webseite 198. Die Webseite 198 beinhaltet eine Beschreibung der gemäß Attributspezifikation auszulesenden Attribute sowie eine Beschreibung des Berechtigungszertifikats 192 im Klartext, welche in einem Textfeld 189 beinhaltet ist. Wenn es sich bei dem Lesegerät 196 um den zweiten Lesegerättyp handelt, so kann die Webseite 198 ein Eingabefeld 199 aufweisen, welches zur Eingabe der Authentifizierungsinformation des Nutzers, wie zum Beispiel von dessen PIN, zur Freischaltung des ID-Tokens 106 dient. Je nach Ausführungsform kann ein weiteres Eingabefeld 191 auf der Webseite 198 vorhanden sein, um dort die Zusatzinformation einzugeben und nicht in das Eingabefeld 162 der Webseite 160, welches dann entfallen kann. Dem Eingabefeld 199 und gegebenenfalls dem Eingabefeld 191 ist jeweils die lokale URL 194 zugeordnet, damit bei einer Eingabe des Nutzers in das entsprechende Eingabefeld die eingegebenen Daten durch Aufruf der lokalen URL an das Programm 113 von dem Internetbrowser 112 übergeben werden.
- Das Programm 113 antwortet dann auf den Aufruf des Internetbrowsers 112 mit der Webseite 198, die von dem Internetbrowser 112 wiedergegeben wird.
   Beispielsweise gehört zu dem Request 166 auch ein Web-Style Sheet 193, wie zum Beispiel ein CSS. Die Web-Style Sheet 193 wird von dem Internetbrowser 112 bei dem Aufruf des Programms 113 mit übergeben. Wenn das Programm 113 anschließend mit der Webseite 198 hierauf antwortet, so beinhaltet diese Antwort auch das Web-Style Sheet 193, sodass dieses von dem Internetbrowser 112 für die Wiedergabe der Webseite 198 verwendet wird. Vorzugsweise wird dasselbe Web-Style Sheet 193 auch für die Wiedergabe der Webseite 160 verwendet sowie auch für die initial von dem Dienst-Computersystem 150 gelieferte Webseite 195. Aufgrund der einheitlichen Formatierung der verschiedenen Webseiten entsteht dadurch bei dem Benutzer ein kohärenter Gesamteindruck und es werden Verwirrungen des Nutzers auch dadurch vermieden, dass die verschiedenen Webseiten in ein und demselben Fenster des Internetbrowsers 112 angezeigt werden.
   Der Nutzer 102 gibt nunmehr seine Authentifizierungsdaten ein, nachdem er die Webseite 198 zur Kenntnis genommen hat. Durch die Eingabe der Authentifizierungsdaten erklärt der Nutzer implizit sein Einverständnis für das Auslesen der Attribute gemäß Attributspezifikation. Falls die Webseite 198 das Eingabefeld 199 beinhaltet, so gibt der Nutzer 102 seine Authentifizierungsdaten dort ein, andernfalls unmittelbar in das Lesegerät 196. Die Authentifizierung des Nutzers kann mithilfe eines kryptografischen Protokolls erfolgen, beispielsweise mittels eines Challenge-Response-Protokolls oder basierend auf einem Diffie-Helman-Schlüsselaustausch, wobei im Rahmen der Authentifizierung des Nutzers ein Session Key vereinbart wird. - Anschließend wird eine zweite Session 202 zwischen dem Internetbrowser 112 und dem ID-Provider-Computersystem 136 über das Netzwerk 116 aufgebaut, und zwar mit Hilfe der URL des ID-Provider-Computersystems 136, die das Nutzer-Computersystem 100 mit dem Request 166 empfangen hat. Die zweite Session 202 wird mit einem gesicherten Transportlayer aufgebaut, beispielsweise als https-Session.
- Über die zweite Session 202 werden der Request 166 und - je nach Ausführungsform - auch das mit Hilfe des öffentlichen Schlüssels des Dienst-Computersystems 150 gewonnene Chiffrat der Zusatzinformation 168 von dem Nutzer-Computersystem 100 an das ID-Provider-Computersystem 136 weitergeleitet.
- Aufgrund des Empfangs des Requests 166 durch das ID-Provider-Computersystem 136 erzeugt dieses durch Ausführen seiner Programminstruktionen 170 eine Session-ID für eine noch aufzubauende dritte Session 203. Der Request 166 und das Chiffrat der Zusatzinformation 168 werden in dem Speicher 140 des ID-Provider-Computersystems 136 gespeichert.
- Das ID-Provider-Computersystem 136 generiert dann eine Nachricht 172, die die Session-ID für den Aufbau der dritten Session 203 und eine logische Adresse beinhaltet. Mit Hilfe der logischen Adresse kann die von dem ID-Provider-Computersystem 136 aufgrund des Request 166 zu erzeugende Response 174 abgerufen werden. Insbesondere kann die logische Adresse als eine URL ausgebildet sein. Die Nachricht 172 wird über die zweite Session 202 von dem ID-Provider-Computersystem 136 an den Internetbrowser 112 gesendet.
- Aufgrund des Empfangs der Nachricht 172 wird die dritte Session 203 zwischen dem Programm 113 des Nutzer-Computersystems 100 und dem ID-Provider-Computersystem 136 über den gesicherten Transportlayer der zweiten Session 202 aufgebaut.
- Über die dritte Session 203 wird dann zumindest das Zertifikat 144 an das Programm 113 übertragen.
- Durch das Programm 113 wird dann geprüft, ob die in dem Zertifikat 144 angegebenen Leserechte ausreichend sind, um einen Lesezugriff des ID-Provider-Computersystems 136 auf das oder die gemäß der Attributspezifikation, die in dem Request 166 beinhaltet ist, zu lesenden Attribute zuzulassen. Nur dann, wenn diese Leserechte ausreichend sind, werden die folgenden Schritte durchgeführt:
   a)Unter der Voraussetzung der erfolgreichen Authentifizierung des Nutzers wird eine vierte Session 204 zwischen dem ID-Token 106 und dem ID-Provider-Computersystem 136 aufgebaut, und zwar über die lokale Verbindung 176 und die dritte Session 203. Die vierte Session 204 wird mit einer Ende-zu-Ende-Verschlüsselung mit Hilfe des Session-Keys, der bei der Authentifizierung des Nutzers in dem Schritt b) vereinbart worden ist, geschützt.
   b) Über die vierte Session erfolgt dann eine gegenseitige Authentifizierung des ID-Tokens 106 und des ID-Provider-Computersystems 136 mit Hilfe der jeweiligen privaten Schlüssel, das heißt den in dem geschützten Speicherbereich 122 gespeicherten privaten Schlüssels des ID-Tokens 106 und dem privaten Schlüssels 142 des ID-Provider-Computersystems 136. Für diese gegenseitige Authentifizierung können die Zertifikate des ID-Tokens 106 aus dem Speicherbereich 126 (vergleiche Figur 1) sowie das Zertifikat 144 des ID-Provider-Computersystems 136 über die vierte Session ausgetauscht werden.
   c) Unter der Voraussetzung der erfolgreichen Authentifizierung des Nutzers gegenüber dem ID-Token und der erfolgreichen gegenseitigen Authentifizierung des ID-Tokens 106 und des ID-Provider-Computersystems 136 sowie der weiteren Voraussetzung der Übereinstimmung des Chiffrats der Transaktionsdaten mit den Transaktionsdaten, liest dann das ID-Provider-Computersystem 136 das oder die Attribute gemäß der Attributspezifikation aus dem ID-Token 106 aus, wobei die Attribute durch die Ende-zu-Ende-Verschlüsselung bei der Übertragung von dem ID-Token 106 zu dem ID-Provider-Computersystem 136 geschützt werden. Hierzu sendet das ID-Provider-Computersystem über die vierte Session 204 ein Lesekommando über die vierte Session an den ID-Token 106. Das Lesekommando 182 beinhaltet die Attributspezifikation, das heißt die Auswahl derjenigen Attribute, die aus dem geschützten Speicherbereich 124 des ID-Tokens 106 ausgelesen werden sollen.
   Durch Ausführung der Programminstruktionen 178 wird dann von dem ID-Provider-Computersystem 136 die Response 174, beispielsweise ein SAML-Response, auf den Request 166 erzeugt. Die Response 178 beinhaltet die zuvor über die vierte Session 240 aus dem ID-Token 106 ausgelesenen Attribute, das Chiffrat der Zusatzinformation 168, sowie die Kennung 180, die das Dienst-Computersystem 150 initial für den Request 166 vergeben hat. Die Response 174 wird von dem ID-Provider-Computersystem 136 mit Hilfe des privaten Schlüssels 142 signiert und dann in dem Speicher 140 gespeichert, so dass die Request 166 von der logischen Adresse abrufbar ist.
- Das Nutzer-Computersystem 100, wie zum Beispiel dessen Internetbrowser 112, liest dann mit Hilfe der logischen Adresse die Response 174 beispielsweise über die zweite Session 202 aus dem Speicher 140.
- Die Response 174 wird dann von dem Nutzer-Computersystem 100, beispielsweise von dem Internetbrowser 112, über die erste Session 201 an das Dienst-Computersystem 150 weitergeleitet. Hierbei kann vorgesehen sein, dass der Nutzer 102 von dem Internetbrowser 112 zur Eingabe einer Bestätigung aufgefordert wird, bevor die Response 174 an das Dienst-Computersystem weitergeleitet wird. Dabei kann ferner vorgesehen sein, dass von dem Internetbrowser 112 der Inhalt der Response 174 ganz oder teilweise angezeigt wird, insbesondere die aus dem ID-Token ausgelesenen Attribute und/oder die Zusatzinformation 168, damit sich der Nutzer 102 von der Richtigkeit dieser Daten überzeugen kann, bevor sie an das Dienst-Computersystem 150 zur Durchführung der Transaktion weitergeleitet werden.
- Das Dienst-Computersystem 150 ordnet die empfangene Response 174 dem Request 166 anhand der übereinstimmenden Kennungen 180 des Requests 166 und der Response 174 zu.
- Das Dienst-Computersystem 150 prüft dann die Signatur der Response 166 und liest das oder die erforderlichen Attribute aus der Response 174 aus. Anhand der Attribute wird dann geprüft, ob die angeforderte Transaktion durchgeführt werden kann, indem das oder die Attribute mit einem oder mehreren vorgegebenen Kriterien verglichen wird. Bei diesen Kriterien kann es sich zum Beispiel um das Alter oder die Kreditwürdigkeit des Nutzers 102 handeln. Bei dem Attribut kann es sich auch um ein Pseudonym des Nutzers 102 handeln, mit Hilfe dessen das Dienst-Computersystem 150 dann ein in einer Datenbank des Dienst-Computersystems 150 gespeichertes Attribut des Nutzers 102, wie zum Beispiel eine Lieferadresse ausliest. Das Prüfkriterium ist hierbei, ob ein Nutzer mit dem in der Response 174 beinhalteten Pseudonym seitens des Dienst-Computersystems 150 registriert ist.
   Ergibt die Prüfung des Dienst-Computersystems 150, dass die Transaktion durchführbar ist, so wird die Transaktion anhand der Transaktionsdaten und der Zusatzinformation 168 durchgeführt.

Das ID-Provider-Computersystem 136 empfängt also das Chiffrat der Transaktionsdaten als Teil des Request 166. Dieses Chiffrat der Transaktionsdaten sendet das ID-Provider-Computersystem 136 beispielsweise über die dritte Session 203 zusammen mit dem Zertifikat 144. Das Programm 113 berechnet dann aus den Transaktionsdaten, die es zum Beispie! über die erste Session von dem Dienst-Computersystem 150 oder durch Eingabe des Nutzers 102 in das Nutzer-Computersystem 100 empfangen hat, das Chiffrat mithilfe der vorgegebenen Einwegfunktion und überprüft ob das so berechnete Chiffrat mit dem von dem ID-Provider-Computersystem 136 empfangenen Chiffrat übereinstimmt. Wenn dies nicht der Fall ist, wird der Ablauf an dieser Stelle abgebrochen.

Alternativ erfolgt diese Prüfung nicht durch das Programm 113, sondern durch das Lesegerät des Nutzer-Computersystems 100 oder durch den ID-Token 106 selbst. Hierzu kann das Chiffrat der Transaktionsdaten, weiches das Nutzer-Computersystem von dem ID-Provider-Computersystem 136 empfangen hat sowie auch die Transaktionsdaten an das Lesegerät oder über die Schnittstelle 104 an den ID-Token 106 weitergeleitet werden. Dort erfolgt dann jeweils die Erzeugung des Chiffrats und die Überprüfung auf Übereinstimmung des berechneten Chiffrats zu dem von dem ID-Provider-Computersystem 136 über das Nutzer-Computersystem 100 empfangenen Chiffrats.

Alternativ kann das ID-Provider-Computersystem 136 das Chiffrat der Transaktionsdaten über die vierte Session 204 unmittelbar an den ID-Token 106 übertragen.

Ferner empfängt der ID-Token 106 die Transaktionsdaten über die Schnittstelle 104 von dem Nutzer-Computersystem 100. Der ID-Token 106 berechnet aus den Transaktionsdaten das Chiffrat mithilfe der vorgegebenen Einwegfunktion und prüft das so berechnete Chiffrat mit dem über die vierte Session empfangenen Chiffrat auf Übereinstimmung. Wenn keine Übereinstimmung vorliegt, wird der Ablauf an dieser Stelle abgebrochen. Diese Ausführungsform ist besonders vorteilhaft, da selbst dann, wenn auf dem Nutzer-Computersystem eine Schad-Software, wie zum Beispiel ein Trojaner, vorhanden sein sollte, keine Angriffsmöglichkeit gegeben ist.

Nach einer Ausführungsform der Erfindung handelt es sich bei dem Programm 113 um ein von dem Internetbrowser 112 separates Anwendungsprogramm, wie zum Beispiel eine sogenannte Bürger-App oder Ausweis-App. Dieses Programm 113 wird von dem Internetbrowser 112 durch Aufruf einer lokalen URL gestartet, wobei die lokale URL eine fest vorgegebener Portnummer gemäß dem TCP-Protokoll beinhaltet. Diese lokale URL wird zusammen mit der Webseite 160 von dem Dienst-Computersystem 150 an das Nutzer-Computersystem 100 übertragen und zwar über die erste Session 201, um das Starten des Programms 113 mit Hilfe der lokalen URL durch den Internetbrowser 112 zu bewirken.

Die Response 174 beinhaltet das Chiffrat der Zusatzinformation 168. Das Dienst-Computersystem 150 entschlüsselt das Chiffrat der Zusatzinformation 168 mit Hilfe des privaten Schlüssels des Dienst-Computersystems 150, um dann mit Hilfe der Zusatzinformation 168 die angeforderte Transaktion durchzuführen. Hierbei kann es sich zum Beispiel um die Durchführung einer finanziellen Transaktion, wie zum Beispiel die Durchführung einer Überweisung in der Höhe des Bezahlbetrags handeln, der in der Zusatzinformation 168 angegeben ist.

Nach einer Ausführungsform der Erfindung beinhaltet die Zusatzinformation 168 ein OTP. Das Dienst-Computersystem 150 prüft dann als zusätzliche Voraussetzung für die Durchführung der Transaktion, ob das OTP gültig ist. Vorzugsweise wird das OTP durch das Nutzer-Computersystem 100 mit dem öffentlichen Schlüssel des Dienst-Computersystems 150 verschlüsselt und dann von dem Dienst-Computersystems 150 nach dem Empfang der Zusatzinformation mit dem verschlüsselten OTP entschlüsselt, um dann dessen Validität zu prüfen.

Nach einer Ausführungsform der Erfindung gehört zu dem erfindungsgemäßen Computersystem ein Terminal 186, bei dem es sich zum Beispiel um einen Automat, insbesondere einen Bankautomat oder Verkaufsautomat, handeln kann. Beispielsweise kann der Nutzer 102 in das Terminal 186 einen Geldbetrag eingeben, um Bargeld von seinem Konto abzuheben. Auf einem Display 188 des Automat wird dann ein optisch erfassbares Muster angezeigt, wie zum Beispiel ein QR-Code, der ein URL des Dienst-Computersystems 150 sowie den von dem Nutzer 102 gewünschten Geldbetrag beinhaltet.

Dieses optische Muster wird von dem Display 188 mit Hilfe einer Kamera 190 des Nutzer-Computersystems 100 erfasst. Das Nutzer-Computersystem 100 erzeugt dann die Transaktionsanforderung 158, die diesen Geldbetrag angibt. Die erste Session 201 wird hier mit Hilfe der aus dem optischen Muster erfassten URL des Dienst-Computersystems 150 aufgebaut und die Transaktionsanforderung 158 mit dem gewünschten Geldbetrag wird über diese erste Session 201 an das Dienst-Computersystem 150 übermittelt. Das Dienst-Computersystem 150 erzeugt dann einen entsprechenden Request 166, um die für die Auszahlung des gewünschten Geldbetrags erforderlichen Attribute und Zusatzinformationen 168 abzufragen.

Je nach Ausführungsform wird dann durch die ID-Provider-Computersystem 136 oder durch das Dienst-Computersystem 150 die Belastung eines Kontos des Nutzers 102, welches dieser zum Beispiel in der Zusatzinformation 168 angegeben hat, veranlasst. Aufgrund des Empfangs der Response 174 und der Veranlassung der Zahlung empfängt dann das Terminal 186 ein Signal zur Ausgabe des gewünschten Geldbetrags zum Beispiel in Form von Bargeld oder zur Aufladung einer Cash-Card des Nutzers 102. Dies kann so erfolgen, dass das Terminal 186 unmittelbar mit dem Dienst-Computersystem 150 verbunden ist oder über das Netzwerk 116.

Alternativ kann es sich bei dem Terminal 186 auch um einen Verkaufsautomat handeln, wobei dann kein Bargeld, sondern ein gewünschtes Produkt, wie zum Beispiel eine Getränkedose oder eine Zigarettenschachtel von dem Verkaufsautomaten abgegeben wird, nachdem die Durchführung der Zahlung von dem Dienst-Computersystem 150 signalisiert worden ist.

In einer weiteren Anwendung kann es sich bei dem Terminal 186 um ein mobiles Telekommunikationsgerät, insbesondere ein Smartphone handeln. Wenn der Nutzer 102 von dem Inhaber des Terminals 186 etwas kaufen möchte, so gibt der Inhaber des Terminals 186 den entsprechenden Kaufpreis in das Terminal 186 ein, so dass dann auf dem Display 188 in Form des optisch erfassbaren Musters wiederum dieser Kaufpreis als Bezahlbetrag sowie die URL des Dienst-Computersystems 150 ausgegeben wird. Nach Beendigung der Transaktion empfängt das Terminal 186 von dem Dienst-Computersystem 150 ein Signal, welches anzeigt, dass der Bezahlvorgang erfolgt ist und der Inhaber des Terminals 186 gibt dann die Ware an den Nutzer 102 ab. Dies kann auch in dem Kassensystem zum Beispiel eines Supermarkts implementiert sein. Eine weitere Anwendung ist ein Taxameter, welches Taxigebühren erfasst oder ein anderer Verbrauchszähler, wie zum Beispiel ein Verbrauchszähler für den Strom- oder Gasverbrauch eines Haushalts, insbesondere ein sog. Smartmeter.

### Bezugszeichenliste

- 100: Nutzer-Computersystem
- 102: Nutzer
- 104: Schnittstelle
- 106: ID-Token
- 108: Schnittstelle
- 110: Prozessor
- 112: Internetbrowser
- 113: Programm
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 132: Programminstruktionen
- 134: Programminstruktionen
- 136: ID-Provider-Computersystem
- 138: Netzwerk-Schnittstelle
- 140: Speicher
- 141: geschützter Speicherbereich
- 142: privater Schlüssel
- 144: Zertifikat
- 145: Prozessor
- 146: Programminstruktionen
- 148: Programminstruktionen
- 150: Dienst-Computersystem
- 152: Netzwerk-Schnittstelle
- 154: Prozessor
- 156: Programminstruktionen
- 158: Transaktionsanforderung
- 160: Webseite
- 162: Eingabefeld
- 164: Eingabeelement
- 166: Request
- 168: Zusatzinformation
- 170: Programminstruktionen
- 172: Nachricht
- 174: Response
- 176: lokale Verbindung
- 178: Programminstruktionen
- 180: Kennung
- 182: Lesekommando
- 184: Display
- 186: Terminal
- 188: Display
- 189: Textfeld
- 190: Kamera
- 191: Eingabefeld
- 192: Berechtigungszertifikat
- 193: Web-Style Sheet
- 194: lokale URL
- 195: Webseite
- 196: Lesegerät
- 197: Speicher
- 198: Webseite
- 199: Eingabefeld

## Patentansprüche

1. Elektronisches Transaktionsverfahren unter Verwendung eines ID-Tokens (106), der einem Nutzer (102) zugeordnet ist, wobei der ID-Token einen elektronischen Speicher (118) mit einem geschützten Speicherbereich (124) aufweist, in dem ein oder mehrere Attribute gespeichert sind, wobei ein Zugriff auf den geschützten Speicherbereich nur über einen Prozessor (128) des ID-Tokens möglich ist, und wobei der ID-Token eine Kommunikations-Schnittstelle (108) zur Kommunikation mit einem Lesegerät (196) eines Nutzer-Computersystems (100) aufweist, mit folgenden Schritten:
- Aufbau einer ersten Session (201) zwischen einem Internetbrowser (112) des Nutzer-Computersystems und einem Dienst-Computersystem (150) über ein Netzwerk (116) zur Übertragung einer Transaktionsanforderung (158) von dem Nutzer-Computersystem an das Dienst-Computersystem (150) über das Netzwerk (116),
- Erzeugung eines Request (166) durch das Dienst-Computersystem aufgrund des Empfangs der Transaktionsanforderung, wobei der Request von dem Dienst-Computersystem signiert wird und der Request eine Attributspezifikation, der aus dem ID-Token für die Durchführung der Transaktion auszulesenden Attribute, ein Berechtigungszertifikat mit einer Zertifikatsbeschreibung und eine URL eines ID-Provider-Computersystems beinhaltet,
- Übertragung des Request (166) von dem Dienst-Computersystem an das Nutzer-Computersystem über die erste Session,
- Aufbau einer zweiten Session zwischen dem Internetbrowser und dem ID-Provider-Computersystem über das Netzwerk mithilfe der URL des ID-Provider-Computersystems, wobei die zweite Session mit einem gesicherten Transportlayer aufgebaut wird,
- Weiterleitung des Request (166) von dem Nutzer-Computersystems (100) an das ID-Provider-Computersystem (136) über die zweite Session,
- Authentifizierung des Nutzers gegenüber dem ID-Token,
- Authentifizierung des ID-Provider-Computersystems gegenüber dem ID-Token über das Netzwerk,
- unter der Voraussetzung der erfolgreichen Authentifizierung des Nutzers und des ID-Provider-Computersystems gegenüber dem ID-Token, Auslesen des oder der Attribute gemäß der Attributspezifikation durch das ID-Provider-Computersystem aus dem ID-Token über das Netzwerk mit Ende-zu-Ende-Verschlüsselung, wobei für die Authentifizierung des ID-Provider-Computersystems und das Auslesen wie folgt vorgegangen wird:
∘ Aufbau einer dritten Session zwischen einem Programm des Nutzer-Computersystems und dem ID-Provider-Computersystem über den gesicherten Transportlayer der zweiten Session, wobei das Programm von dem Internetbrowser verschieden ist,
∘ Übertragung zumindest eines Zertifikats des ID-Provider-Computersystems an das Programm, wobei das Zertifikat eine Angabe von Leserechten des ID-Provider-Computersystems zum Lesen von einem oder mehreren der in dem ID-Token gespeicherten Attribute beinhaltet, wobei die Übertragung des Zertifikats über die dritte Session erfolgt,
∘ Prüfung durch das Programm, ob die in dem Zertifikat angegebenen Leserechte ausreichend sind, um einen Lesezugriff des ID-Provider-Computersystems auf das oder die gemäß der Attributspezifikation zu lesenden Attribute zu zulassen,
- Übertragung einer Response (174) von dem ID-Provider-Computersystem über das Nutzer-Computersystem an das Dienst-Computersystem, wobei die Übertragung der Response über das Netzwerk erfolgt, wobei die Response das oder die ausgelesenen Attribute beinhaltet, und wobei die Response von dem ID-Provider-Computersystem signiert ist,
- Durchführung der Transaktion mithilfe des oder der Attribute durch das Dienst-Computersystem,
wobei das Programm von dem Internetbrowser mittels einer lokalen URL (194) aufgerufen wird, wobei die lokale URL eine fest vorgegebene Portnummer gemäß dem TCP-Protokoll beinhaltet, wobei die lokale URL zusammen mit dem Request (166) von dem Dienst-Computersystem an das Nutzer-Computersystem übertragen wird, um den Aufruf des Programms mithilfe der lokalen URL durch den Internetbrowser zu bewirken, wobei für die Authentifizierung des Nutzers gegenüber dem ID-Token die folgenden Schritte durchgeführt werden:
- Erzeugung einer Webseite (198) durch das Programm (113), die eine Beschreibung der gemäß der Attributspezifikation aus dem ID-Token auszulesenden Attribute und eine Beschreibung des Berechtigungszertifikats des Dienst-Computersystems sowie eine Eingabeaufforderung an den Nutzer zur Eingabe von dessen Authentifizierungsdaten zur Authentifizierung gegenüber dem ID-Token beinhaltet,
- Antwort des Programms auf den Aufruf der lokalen URL mit der Webseite (198), sodass die Webseite von dem Internetbrowser wiedergegeben wird,
- Eingabe der Authentifizierungsdaten durch den Nutzer aufgrund der Eingabeforderung,
- Durchführung der Authentifizierung des Nutzers gegenüber dem ID-Token mithilfe der eingegebenen Authentifizierungsdaten.

2. Verfahren nach Anspruch 1, wobei der Request Transaktionsdaten zur Spezifizierung der Transaktion beinhaltet, und die Durchführung der Transaktion mithilfe der Transaktionsdaten erfolgt.

3. Verfahren nach Anspruch 1 oder 2, wobei es sich bei dem Lesegerät des Nutzer-Computersystems um einen ersten Lesegerättyp oder einen zweiten Lesegerättyp handelt, wobei nur der erste Lesegerättyp die Eingabe der Authentifizierungsdaten des Nutzers unmittelbar in das Lesegerät ermöglicht, mit folgenden weiteren Schritten:
- Abfrage des Lesegerättyps von dem Lesegerät durch das Programm,
- nur wenn der zweite Lesegerättyp vorliegt, Erzeugung der Webseite (198) mit einem Eingabefeld (199) zur Eingabe der Authentifizierungsdaten des Nutzers über das Nutzer-Computersystem, wobei das Eingabefeld der Webseite mit der lokalen URL (194) verknüpft ist, sodass durch die Eingabe der Authentifizierungsdaten des Nutzers in das Eingabefeld die lokale URL erneut aufgerufen wird, um die Authentifizierungsdaten in das Programm einzugeben, um dann mithilfe der Authentifizierungsdaten die Authentifizierung des Nutzers gegenüber dem ID-Token durchzuführen.

4. Verfahren nach einem der vorhergehenden Ansprüche, wobei der Request (166) ein Web-Style Sheet (193) beinhaltet, der mit dem Aufruf der lokalen URL von dem Internetbrowser an das Programm übergeben wird, sodass die Erzeugung der Webseite durch das Programm gemäß dem Web-Style Sheet erfolgt.

5. Verfahren nach Anspruch 2, 3 oder 4, Erzeugung eines Chiffrats der Transaktionsdaten mit Hilfe einer Einwegfunktion und Übertragung des Chiffrats an das ID-Provider-Computersystem über das Netzwerk, Übertragung des Chiffrats der Transaktionsdaten von dem ID-Provider-Computersystem an das Nutzer-Computersystem und Prüfung, ob das Chiffrat mit den Transaktionsdaten übereinstimmt, wobei das Auslesen des oder der Attribute gemäß der Attributspezifikation unter der weiteren Voraussetzung der Übereinstimmung des Chiffrats und der Transaktionsdaten erfolgt, wobei neben dem Request das Chiffrat der Transaktionsdaten von dem Internetbrowser an das ID-Provider-Computersystem über die zweite Session weitergeleitet wird, wobei das Chiffrat der Transaktionsdaten von dem Dienst-Computersystem erzeugt wird und das Chiffrat der Transaktionsdaten als Teil des Requests von dem Dienst-Computersystem an das ID-Provider-Computersystem über das Netzwerk übertragen wird, wobei der Request von dem Dienst-Computersystem signiert ist.

6. Verfahren nach Anspruch 5, wobei die Prüfung, ob das Chiffrat mit den Transaktionsdaten übereinstimmt, durch das Nutzer-Computersystem durchgeführt wird.

7. Verfahren nach Anspruch 5 oder 6, wobei das Nutzer-Computersystem die Transaktionsdaten an das Lesegerät überträgt, und die Prüfung, ob das Chiffrat mit den Transaktionsdaten übereinstimmt, durch das Lesegerät durchgeführt wird.

8. Verfahren nach einem der vorhergehenden Ansprüche, wobei der Request (166) eine Kennung aufweist, wobei nur wenn die Leserechte ausreichend sind, die folgenden Schritte durchgeführt werden:
a) Aufbau einer lokalen Verbindung (176) zwischen dem Lesegerät des Nutzer-Computersystems und dem ID-Token,
b) Authentifizierung des Nutzers gegenüber dem ID-Token, wobei ein Session-Key vereinbart wird,
c) Aufbau einer vierten Session (204) zwischen dem ID-Token und dem ID-Provider-Computersystem über die lokale Verbindung und die dritte Session mit einer Ende-zu-Ende Verschlüsselung mithilfe des Session-Key,
d) Gegenseitige Authentifizierung des ID-Tokens und des ID-Provider-Computersystems über die vierte Session,
e) Auslesen des oder der Attribute gemäß der Attributspezifikation durch das ID-Provider-Computersystem über die vierte Session aus dem ID-Token.
- Erzeugung der Response (174), die ferner die Kennung (180) des Request beinhaltet, ,
- Speicherung der Response zum Abrufen mit Hilfe einer logischen Adresse,
- Lesen der Response von dem ID-Provider-Computersystem durch das Nutzer-Computersystem durch Abruf der Response mittels eines Lesekommandos von der logischen Adresse über das Netzwerk,
- Weiterleitung der Response durch das Nutzer-Computersystem über die erste Session an das Dienst-Computersystem,
- Zuordnung der Response zu dem Request mit Hilfe der Kennung, die in der Response beinhaltet ist, durch das Dienst-Computersystem,
- Durchführung der Transaktion mithilfe der Response durch das ID-Provider-Computersystem.

9. Verfahren nach Anspruch 8, wobei das Nutzer-Computersystem die Transaktionsdaten über das Lesegerät an den ID-Token überträgt, und der ID-Token die Prüfung, ob das Chiffrat mit den Transaktionsdaten übereinstimmt, vornimmt, wobei der ID-Token das Chiffrat über die vierte Session von dem ID-Provider-Computersystem empfängt.

10. Verfahren nach einem der vorhergehenden Ansprüche, wobei es sich bei dem ID-Token um ein Wert- oder Sicherheitsdokument handelt, das heißt insbesondere ein Ausweisdokument, das heißt ein ID-Dokument, insbesondere einen elektronischen Personalausweis, Reisepass, Führerschein, Firmenausweis oder ein Zahlungsmittel, wie zum Beispiel eine Banknote, eine Kreditkarte oder einen sonstigen Berechtigungsnachweis, wie zum Beispiel eine Eintrittskarte, einen Frachtbrief oder ein Visum, insbesondere eine Chipkarte, insbesondere mit RFID- und/oder NFC-Schnittstelle.

11. Computersystem mit einem Dienst-Computersystem (150), einem Nutzer-Computersystem (100) einem ID-Provider-Computersystem (136) und einem ID-Token (106), der einem Nutzer (102) zugeordnet ist, wobei der ID-Token einen elektronischen Speicher (118) mit einem geschützten Speicherbereich (124) aufweist, in dem ein oder mehrere Attribute gespeichert sind, wobei ein Zugriff auf den geschützten Speicherbereich nur über einen Prozessor (128) des ID-Tokens möglich ist, und wobei der ID-Token eine Kommunikations-Schnittstelle (108) zur Kommunikation mit einem Lesegerät (196) eines Nutzer-Computersystems (100) aufweist,
wobei das Dienst-Computersystem, das Nutzer-Computersystem, das ID-Provider-Computersystem und der ID-Token zur Durchführung der folgenden Schritte ausgebildet sind:
- Aufbau einer ersten Session (201) zwischen einem Internetbrowser (112) des Nutzer-Computersystems und einem Dienst-Computersystem (150) über ein Netzwerk (116) zur Übertragung einer Transaktionsanforderung (158) von dem Nutzer-Computersystem an das Dienst-Computersystem (150) über das Netzwerk (116),
- Erzeugung eines Request (166) durch das Dienst-Computersystem aufgrund des Empfangs der Transaktionsanforderung, wobei der Request von dem Dienst-Computersystem signiert wird und der Request eine Attributspezifikation, der aus dem ID-Token für die Durchführung der Transaktion auszulesenden Attribute, ein Berechtigungszertifikat mit einer Zertifikatsbeschreibung und eine URL eines ID-Provider-Computersystems beinhaltet,
- Übertragung des Request (166) von dem Dienst-Computersystem an das Nutzer-Computersystem über die erste Session,
- Aufbau einer zweiten Session zwischen dem Internetbrowser und dem ID-Provider-Computersystem über das Netzwerk mithilfe der URL des ID-Provider-Computersystems, wobei die zweite Session mit einem gesicherten Transportlayer aufgebaut wird,
- Weiterleitung des Request (166) von dem Nutzer-Computersystems (100) an das ID-Provider-Computersystem (136) über die zweite Session,
- Authentifizierung des Nutzers gegenüber dem ID-Token,
- Authentifizierung des ID-Provider-Computersystems gegenüber dem ID-Token über das Netzwerk,
- unter der Voraussetzung der erfolgreichen Authentifizierung des Nutzers und des ID-Provider-Computersystems gegenüber dem ID-Token, Auslesen des oder der Attribute gemäß der Attributspezifikation durch das ID-Provider-Computersystem aus dem ID-Token über das Netzwerk mit Ende-zu-Ende-Verschlüsselung, wobei für die Authentifizierung des ID-Provider-Computersystems und das Auslesen wie folgt vorgegangen wird:
∘ Aufbau einer dritten Session zwischen einem Programm des Nutzer-Computersystems und dem ID-Provider-Computersystem über den gesicherten Transportlayer der zweiten Session, wobei das Programm von dem Internetbrowser verschieden ist,
∘ Übertragung zumindest eines Zertifikats des ID-Provider-Computersystems an das Programm, wobei das Zertifikat eine Angabe von Leserechten des ID-Provider-Computersystems zum Lesen von einem oder mehreren der in dem ID-Token gespeicherten Attribute beinhaltet, wobei die Übertragung des Zertifikats über die dritte Session erfolgt,
∘ Prüfung durch das Programm, ob die in dem Zertifikat angegebenen Leserechte ausreichend sind, um einen Lesezugriff des ID-Provider-Computersystems auf das oder die gemäß der Attributspezifikation zu lesenden Attribute zu zulassen,
- Übertragung einer Response (174) von dem ID-Provider-Computersystem über das Nutzer-Computersystem an das Dienst-Computersystem, wobei die Übertragung der Response über das Netzwerk erfolgt, wobei die Response das oder die ausgelesenen Attribute beinhaltet, und wobei die Response von dem ID-Provider-Computersystem signiert ist,
- Durchführung der Transaktion mithilfe des oder der Attribute durch das Dienst-Computersystem, wobei das Programm von dem Internetbrowser mittels einer lokalen URL (194) aufgerufen wird,
wobei die lokale URL eine fest vorgegebene Portnummer gemäß dem TCP-Protokoll beinhaltet, wobei die lokale URL zusammen mit dem Request (166) von dem Dienst-Computersystem an das Nutzer-Computersystem übertragen wird, um den Aufruf des Programms mithilfe der lokalen URL durch den Internetbrowser zu bewirken, wobei für die Authentifizierung des Nutzers gegenüber dem ID-Token die folgenden Schritte durchgeführt werden:
- Erzeugung einer Webseite (198) durch das Programm (113), die eine Beschreibung der gemäß der Attributspezifikation aus dem ID-Token auszulesenden Attribute und eine Beschreibung des Berechtigungszertifikats des Dienst-Computersystems sowie eine Eingabeaufforderung an den Nutzer zur Eingabe von dessen Authentifizierungsdaten zur Authentifizierung gegenüber dem ID-Token beinhaltet,
- Antwort des Programms auf den Aufruf der lokalen URL mit der Webseite (198), sodass die Webseite von dem Internetbrowser wiedergegeben wird,
- Eingabe der Authentifizierungsdaten durch den Nutzer aufgrund der Eingabeforderung,
- Durchführung der Authentifizierung des Nutzers gegenüber dem ID-Token mithilfe der eingegebenen Authentifizierungsdaten.

## Claims

1. An electronic transaction method using an ID token (106), which is assigned to a user (102), wherein the ID token has an electronic memory (118) with a protected memory area (124), in which one or more attributes is/are stored, wherein access to the protected memory area is possible only via a processor (128) of the ID token, and wherein the ID token has a communications interface (108) for communicating with a reader (196) of a user computer system (100), said method comprising the following steps:
- setting up a first session (201) between an Internet browser (112) of the user computer system and a service computer system (150) via a network (116) for transmitting a transaction demand (158) from the user computer system to the service computer system (150) via the network (116),
- generating a request (166) by the service computer system on account of the receipt of the transaction demand, wherein the request is signed by the service computer system and the request contains an attribute specification containing attributes that are to be read from the ID token for the execution of the transaction, an authorisation certificate with a certificate specification, and a URL of an ID provider computer system,
- transmitting the request (166) from the service computer system to the user computer system via the first session,
- setting up a second session between the Internet browser and the ID provider computer system via the network with the aid of the URL of the ID provider computer system, wherein the second session is set up with a secured transport layer,
- forwarding the request (166) from the user computer system (100) to the ID provider computer system (136) via the second session,
- authenticating the user to the ID token,
- authenticating the ID provider computer system to the ID token via the network,
- on the condition of successful authentication of the user and the ID provider computer system to the ID token, reading of the one or more attributes according to the attribute specification by the ID provider computer system from the ID token via the network with end-to-end encryption, wherein the following steps are performed for the authentication of the ID provider computer system and the reading process:
∘ setting up a third session between a program of the user computer system and the ID provider computer system via the secured transport layer of the second session, wherein the program is different from the Internet browser,
∘ transmitting at least one certificate of the ID provider computer system to the program, wherein the certificate contains a specification of read rights of the ID provider computer system for reading one or more of the attributes stored in the ID token, wherein the certificate is transmitted via the third session,
∘ checking, by the program, whether the read rights specified in the certificate are sufficient to grant read access of the ID provider computer system to the one or more attributes that is/are to be read according to the attribute specification,
- transmitting a response (174) from the ID provider computer system via the user computer system to the service computer system, wherein the response is transmitted via the network, wherein the response contains the one or more read attributes, and wherein the response is signed by the ID provider computer system,
- executing the transaction with the aid of the one or more attributes by the service computer system,
wherein the program is called up by the Internet browser by means of a local URL (194), wherein the local URL contains a fixedly predefined port number in accordance with the TCP protocol, wherein the local URL is transmitted together with the request (166) from the service computer system to the user computer system in order to cause the program to be called up with the aid of the local URL by the Internet browser, wherein the following steps are performed for the authentication of the user to the ID token:
- producing a website (198) by the program (113), which website contains a description of the attributes to be read from the ID token according to the attribute specification and a description of the authorisation certificate of the service computer system, and an input demand for the user to input his/her authentication data for authentication to the ID token,
- responding, on the part of the program, to the calling up of the local URL with the website (198), such that the website is reproduced by the Internet browser,
- inputting the authentication data by the user on account of the input demand,
- executing the authentication of the user to the ID token with the aid of the input authentication data.

2. The method according to claim 1, wherein the request contains transaction data for specifying the transaction, and the transaction is executed with the aid of the transaction data.

3. The method according to claim 1 or 2, wherein the reader of the user computer system is a first reader type or a second reader type, wherein only the first reader type enables the authentication data of the user to be input directly into the reader, comprising the following further steps:
- querying of the reader type of the reader by the program,
- only if the second reader type is present, producing the website (198) with an input field (199) for inputting the authentication data of the user via the user computer system, wherein the input field of the website is linked to the local URL (194), such that the local URL is called up again as a result of the input of the authentication data of the user into the input field, in order to input the authentication data into the program so as to then execute the authentication of the user to the ID token with the aid of the authentication data.

4. The method according to any one of the preceding claims, wherein the request (166) contains a web-style sheet (193), which is transmitted with the calling up of the local URL from the Internet browser to the program, such that the website is produced by the program in accordance with the web-style sheet.

5. The method according to claim 2, 3 or 4, comprising the steps of producing a cipher of the transaction data with the aid of a one-way function and transmitting the cipher to the ID provider computer system via the network, transmitting the cipher of the transaction data from the ID provider computer system to the user computer system, and checking whether the cipher matches the transaction data, wherein the one or more attributes is/are read out according to the attribute specification under the further precondition that the cipher and the transaction data match, wherein, besides the request, the cipher of the transaction data is forwarded from the Internet browser to the ID provider computer system via the second session, wherein the cipher of the transaction data is produced by the service computer system and the cipher of the transaction data is transmitted as part of the request from the service computer system to the ID provider computer system via the network, wherein the request is signed by the service computer system.

6. The method according to claim 5, wherein the check as to whether the cipher matches the transaction data is performed by the user computer system.

7. The method according to claim 5 or 6, wherein the user computer system transmits the transaction data to the reader, and the check as to whether the cipher matches the transaction data is performed by the reader.

8. The method according to any one of the preceding claims, wherein the request (166) comprises an identifier, wherein the following steps are performed only if the read rights are sufficient:
a) setting up a local connection (176) between the reader of the user computer system and the ID token,
b) authenticating the user to the ID token, wherein a session key is agreed,
c) setting up a fourth session (204) between the ID token and the ID provider computer system via the local connection and the third session with end-to-end encryption with the aid of the session key,
d) mutual authentication of the ID token and of the ID provider computer system via the fourth session,
e) reading of the one or more attributes according to the attribute specification by the ID provider computer system from the ID token via the fourth session,
- producing the response (174), which also contains the identifier (180) of the request,
- storing the response such that it can be called up with the aid of a logical address,
- reading the response from the ID provider computer system by the user computer system by calling up the response by means of a read command from the logistical address via the network,
- forwarding the response by the computer system via the first session to the service computer system,
- assigning the response to the request with the aid of the identifier, which is contained in the response, by the service computer system,
- performing the transaction with the aid of the response by the ID provider computer system.

9. The method according to claim 8, wherein the user computer system transmits the transaction data via the reader to the ID token, and the ID token performs the check as to whether the cipher matches the transaction data, wherein the ID token receives the cipher via the fourth session from the ID provider computer system.

10. The method according to any one of the preceding claims, wherein the ID token is a value or security document, that is to say in particular an identity document, that is to say an ID document, in particular an electronic identity card, passport, driver's licence, company identification document, or a payment means, such as a banknote, a credit card, or another proof of authority, such as an admission ticket, a consignment note, or a Visa, in particular a chip card, in particular with RFID and/or NFC interface.

11. A computer system comprising a service computer system (150), a user computer system (100), an ID provider computer system (136), and an ID token (106), which is assigned to a user (102), wherein the ID token has an electronic memory (118) with a protected memory area (124), in which one or more attributes is/are stored, wherein access to the protected memory area is possible only via a processor (128) of the ID token, and wherein the ID token has a communications interface (108) for communicating with a reader (196) of a user computer system (100),
wherein the service computer system, the user computer system, the ID provider computer system and the ID token are configured to carry out the following steps:
- setting up a first session (201) between an Internet browser (112) of the user computer system and a service computer system (150) via a network (116) for transmitting a transaction demand (158) from the user computer system to the service computer system (150) via the network (116),
- generating a request (166) by the service computer system on account of the receipt of the transaction demand, wherein the request is signed by the service computer system and the request contains an attribute specification containing attributes that are to be read from the ID token for the execution of the transaction, an authorisation certificate with a certificate specification, and a URL of an ID provider computer system,
- transmitting the request (166) from the service computer system to the user computer system via the first session,
- setting up a second session between the Internet browser and the ID provider computer system via the network with the aid of the URL of the ID provider computer system, wherein the second session is set up with a secured transport layer,
- forwarding the request (166) from the user computer system (100) to the ID provider computer system (136) via the second session,
- authenticating the user to the ID token,
- authenticating the ID provider computer system to the ID token via the network,
- on the condition of successful authentication of the user and the ID provider computer system to the ID token, reading of the one or more attributes according to the attribute specification by the ID provider computer system from the ID token via the network with end-to-end encryption, wherein the following steps are performed for the authentication of the ID provider computer system and the reading process:
∘ setting up a third session between a program of the user computer system and the ID provider computer system via the secured transport layer of the second session, wherein the program is different from the Internet browser,
∘ transmitting at least one certificate of the ID provider computer system to the program, wherein the certificate contains a specification of read rights of the ID provider computer system for reading one or more of the attributes stored in the ID token, wherein the certificate is transmitted via the third session,
∘ checking, by the program, whether the read rights specified in the certificate are sufficient to grant read access of the ID provider computer system to the one or more attributes that is/are to be read according to the attribute specification,
- transmitting a response (174) from the ID provider computer system via the user computer system to the service computer system, wherein the response is transmitted via the network, wherein the response contains the one or more read attributes, and wherein the response is signed by the ID provider computer system,
- executing the transaction with the aid of the one or more attributes by the service computer system, wherein the program is called up by the Internet browser by means of a local URL (194),
wherein the local URL contains a fixedly predefined port number in accordance with the TCP protocol, wherein the local URL is transmitted together with the request (166) from the service computer system to the user computer system in order to cause the program to be called up with the aid of the local URL by the Internet browser, wherein the following steps are performed for the authentication of the user to the ID token:
- producing a website (198) by the program (113), which website contains a description of the attributes to be read from the ID token according to the attribute specification and a description of the authorisation certificate of the service computer system, and an input demand for the user to input his/her authentication data for authentication to the ID token,
- responding, on the part of the program, to the calling up of the local URL with the website (198), such that the website is reproduced by the Internet browser,
- inputting the authentication data by the user on account of the input demand,
- executing the authentication of the user to the ID token with the aid of the input authentication data.

## Revendications

1. Procédé de transaction électronique moyennant une utilisation d'un jeton d'identification ID (106), qui est associé à un utilisateur (102), où le jeton d'ID présente une mémoire électronique (118) avec une zone de mémoire protégée (124), dans laquelle un ou plusieurs attributs sont stockés, où un accès à la zone de mémoire sécurisée n'est possible que par le biais d'un processeur (128) du jeton d'ID, et où le jeton d'ID présente une interface de communication (108) pour la communication avec un lecteur (196) d'un système informatique d'utilisateur (100), avec les étapes suivantes :
- établissement d'une première session (201) entre un navigateur internet (112) du système informatique d'utilisateur et un système informatique de service (150) par le biais d'un réseau (116) pour la transmission d'une demande de transaction (158) du système informatique d'utilisateur vers le système informatique de service (150) par le biais du réseau (116)
- génération d'une requête (136) par le système informatique de service en raison de la réception de la demande de transaction, où la requête est signée par le système informatique et la requête contient une spécification d'attribut parmi les attributs lisibles à partir du jeton d'ID pour l'exécution de la transaction, un certificat de qualification avec une description de certificat et un localisateur uniforme de ressources URL d'un système informatique de fournisseur d'ID,
- transmission de la requête (166) du système informatique de service vers le système informatique d'utilisateur par le biais de la première session,
- établissement d'une deuxième session entre le navigateur internet et le système informatique de fournisseur d'ID par le biais du réseau à l'aide de l'URL du système informatique de fournisseur d'ID, où la deuxième session est construite avec une couche de transport sécurisée,
- acheminement de la requête (166) du système informatique d'utilisateur (100) vers le système informatique de fournisseur d'ID (136) par le biais de la deuxième session,
- authentification de l'utilisateur vis-à-vis du jeton d'ID,
- authentification du système informatique de fournisseur d'ID vis-à-vis du jeton d'ID par le biais du réseau,
- moyennant la condition de l'authentification réussie de l'utilisateur et du système informatique de fournisseur d'ID vis-à-vis du jeton d'ID, lecture du ou des attributs selon la spécification d'attribut par le système informatique de fournisseur d'ID à partir du jeton d'ID par le biais du réseau avec un chiffrement de bout en bout, où, pour l'authentification du système informatique de fournisseur d'ID et la lecture, on procède de la manière suivante :
∘ établissement d'une troisième session entre un programme du système informatique d'utilisateur et le système informatique de fournisseur d'ID par le biais de la couche de transport sécurisée de la deuxième session, où le programme est différent du navigateur d'internet,
∘ transmission d'au moins un certificat du système informatique de fournisseur d'ID au programme, où le certificat contient une indication de droits de lecture du système informatique de fournisseur d'ID pour la lecture d'un ou de plusieurs attributs stockés dans le jeton d'ID, où la transmission du certificat a lieu par le biais de la troisième session,
∘ vérification, par le programme, si les droits de lecture indiqués dans le certificat sont suffisants pour autoriser un accès en lecture du système informatique de fournisseur d'ID sur le ou les attributs à lire selon la spécification d'attribut,
- transmission d'une réponse (174) du système informatique de fournisseur d'ID vers le système informatique de service par le biais du système informatique d'utilisateur, où la transmission de la réponse a lieu par le biais du réseau, où la réponse contient le ou les attributs lus et où la réponse est signée par le système informatique de fournisseur d'ID,
- exécution de la transaction à l'aide du ou des attributs par le système informatique de service,
où il est fait appel au programme par le navigateur d'internet au moyen d'un URL (194) local, où l'URL local contient un numéro de port prédéterminé de manière fixe selon le protocole de contrôle de transmissions TCP, où l'URL local est transmis ensemble avec la requête (166) du système informatique de service au système informatique d'utilisateur afin d'activer l'appel du programme à l'aide de l'URL local par le navigateur d'internet, où, pour l'authentification de l'utilisateur vis-à-vis du jeton d'ID, les étapes suivantes sont exécutées :
- création d'une page web (198) par le programme (113) qui contient une description des attributs à lire à partir du jeton d'ID selon la spécification d'attributs et une description du certificat de qualification du système informatique de service, ainsi qu'une demande de saisie vis-à-vis de l'utilisateur pour la saisie de ses données d'authentification pour l'authentification vis-à-vis du jeton d'ID,
- réponse du programme à l'appel de l'URL local avec la page web (198) de sorte que la page web est reproduite par le navigateur d'internet,
- saisie des données d'authentification par l'utilisateur en raison de la demande de saisie,
- exécution de l'authentification de l'utilisateur vis-à-vis du jeton d'ID à l'aide des données d'authentification saisies.

2. Procédé selon la revendication 1, dans lequel la requête contient des données de transaction pour la spécification de la transaction, et l'exécution de la transaction a lieu à l'aide des données de transaction.

3. Procédé selon la revendication 1 ou 2, dans lequel, dans le cas du lecteur du système informatique d'utilisateur, il s'agit d'un premier type de lecteur ou d'un deuxième type de lecteur, où uniquement le premier type de lecteur permet la saisie des données d'authentification de l'utilisateur immédiatement dans le lecteur, avec les autres étapes suivantes :
- questionnement du lecteur sur le type de lecteur par le programme,
- uniquement si le type de lecteur est disponible, création de la page web (198) avec un champ de saisie (199) pour la saisie des données d'authentification de l'utilisateur par le biais du système informatique d'utilisateur, où le champ de saisie de la page web est relié avec l'URL (194) local, de sorte que, par la saisie des données d'authentification de l'utilisateur, l'URL local est de nouveau appelé dans le champ de saisie afin d'indiquer les données d'authentification dans le programme, pour exécuter alors l'authentification de l'utilisateur vis-à-vis du jeton d'ID à l'aide des données d'authentification.

4. Procédé selon l'une des revendications précédentes, dans lequel la requête (166) contient une feuille de style du web (196) qui est transmise avec l'appel de l'URL local du navigateur internet vers le programme, de sorte que la création de la page web a lieu par le programme selon la feuille de style du web.

5. Procédé selon la revendication 2, 3 ou 4, création d'une formule chiffrée des données de transaction à l'aide d'une fonction unidirectionnelle et transmission de la formule chiffrée au système informatique de fournisseur d'ID par le biais du réseau, transmission de la formule chiffrée des données de transaction du système informatique de fournisseur d'ID vers le système informatique d'utilisateur, et vérification si la formule chiffrée correspond aux données de transaction, où la lecture du ou des attributs a lieu selon la spécification d'attributs moyennent la condition supplémentaire de la concordance de la formule chiffrée et des données de transaction, où, à côté de la requête, la formule chiffrée des données de transaction est acheminée par le navigateur d'internet vers le système informatique de fournisseur d'ID par le biais de la deuxième session, où la formule chiffrée des données de transaction est générée par le système informatique de service et la formule chiffrée des données de transaction est transmise sous la forme d'une partie de la requête du système informatique de service vers le système informatique de fournisseur d'ID par le biais du réseau, où la requête est signée par le système informatique de service.

6. Procédé selon la revendication 5, dans lequel la vérification si la formule chiffrée correspond avec les données de transaction est effectuée par le système informatique d'utilisateur.

7. Procédé selon la revendication 5 ou 6, dans lequel le système informatique d'utilisateur transmet les données de transaction au lecteur et la vérification si la formule chiffrée correspond avec les données de transaction est effectuée par le lecteur.

8. Procédé selon l'une des revendications précédentes, dans lequel la requête (166) présente un identifiant, où uniquement lorsque les droits de lecture sont suffisants, les étapes suivantes sont exécutées :
a) établissement d'une liaison locale (176) entre le lecteur du système informatique d'utilisateur et le jeton d'ID,
b) authentification de l'utilisateur vis-à-vis du jeton d'ID, où une clé de session est convenue,
c) établissement d'une quatrième session (204) entre le jeton d'ID et le système informatique de fournisseur d'ID par le biais de la liaison locale et de la troisième session avec un chiffrement de bout en bout à l'aide de la clé de session,
d) authentification réciproque du jeton d'ID et du système informatique de fournisseur d'ID par le biais de la quatrième session,
e) lecture du ou des attributs selon la spécification d'attributs par le système informatique de fournisseur d'ID par le biais de la quatrième session à partir du jeton d'ID,
- génération d'une réponse (174) qui contient en outre l'identifiant (180) de la requête,
- stockage de la réponse pour le rappel à l'aide d'une adresse logique,
- lecture de la réponse provenant du système informatique de fournisseur d'ID par le système informatique d'utilisateur par le rappel de la réponse au moyen d'une commande de lecture de l'adresse logique par le biais du réseau,
- acheminement de la réponse par le système informatique d'utilisateur par le biais de la première session vers le système informatique de service,
- association de la réponse à la requête à l'aide de l'identifiant qui est contenu dans la réponse, par le système informatique de service,
- exécution de la transaction à l'aide de la réponse par le système informatique de fournisseur d'accès.

9. Procédé selon la revendication 8, dans lequel le système informatique d'utilisateur transmet les données de transaction au jeton d'ID par le biais du lecteur, et le jeton d'ID effectue la vérification si la formule chiffrée correspond aux données de transaction, où le jeton d'ID reçoit la formule chiffrée du système informatique de fournisseur d'ID par le biais de la quatrième session.

10. Procédé selon l'une des revendications précédentes, dans lequel, dans le cas du jeton d'ID, il s'agit d'un document de valeur ou de sécurité, ce qui signifie notamment un document d'identité, c'est-à-dire un document d'ID, notamment une carte personnelle d'identité électronique, un passeport, un permis de conduire, une carte d'entreprise ou un moyen de paiement, comme, par exemple, un billet de banque, une carte de crédit ou un quelconque autre document de justification, comme, par exemple, une carte d'entrée, une lettre de transport ou un visa, en particulier, une carte à puce, notamment avec une interface RFID et/ou NFC.

11. Système informatique avec un système informatique de service (150), un système informatique d'utilisateur (100), un système informatique de fournisseur d'ID (136) et un jeton d'ID (106), qui est associé avec un utilisateur (102), où le jeton d'ID présente une mémoire électronique (118) avec une zone de mémoire protégée (124), dans laquelle un ou plusieurs attributs sont stockés, où un accès à la zone de stockage protégée n'est possible que par le biais d'un processeur (128) du jeton d'ID, et où le jeton d'ID présente une interface de communication (108) pour la communication avec un lecteur (196) d'un système informatique d'utilisateur (100), où le système informatique de service, le système informatique d'utilisateur, le système informatique de fournisseur d'ID et le jeton d'ID sont conçus pour l'exécution des étapes suivantes :
- établissement d'une première session (201) entre un navigateur internet (112) du système informatique d'utilisateur et un système informatique de service (150) par le biais d'un réseau (116) pour la transmission d'une demande de transaction (158) du système informatique d'utilisateur vers le système informatique de service (150) par le biais du réseau (116)
- génération d'une requête (136) par le système informatique de service en raison de la réception de la demande de transaction, où la requête est signée par le système informatique et la requête contient une spécification d'attributs parmi des attributs à lire à partir du jeton d'ID pour l'exécution de la transaction, un certificat de qualification avec une description de certificat et un URL d'un système informatique de fournisseur d'ID,
- transmission de la requête (166) du système informatique de service vers le système informatique d'utilisateur par le biais de la première session,
- établissement d'une deuxième session entre le navigateur internet et le système informatique de fournisseur d'ID par le biais du réseau à l'aide de l'URL du système informatique de fournisseur d'ID, où la deuxième session est construite avec une couche de transport sécurisée,
- acheminement de la requête (166) du système informatique d'utilisateur (100) vers le système informatique de fournisseur d'ID (136) par le biais de la deuxième session,
- authentification de l'utilisateur vis-à-vis du jeton d'ID,
- authentification du système informatique de fournisseur d'ID vis-à-vis du jeton d'ID par le biais du réseau,
- moyennant la condition de l'authentification réussie de l'utilisateur et du système informatique de fournisseur d'ID vis-à-vis du jeton d'ID, lecture du ou des attributs selon la spécification d'attributs par le système informatique de fournisseur d'ID à partir du jeton d'ID par le biais du réseau avec un chiffrement de bout en bout, où, pour l'authentification du système informatique de fournisseur d'ID et la lecture, on procède de la manière suivante :
∘ établissement d'une troisième session entre un programme du système informatique d'utilisateur et le système informatique de fournisseur d'ID par le biais de la couche de transport sécurisée de la deuxième session, où le programme est différent du navigateur d'internet,
∘ transmission d'au moins un certificat du système informatique de fournisseur d'ID au programme, où le certificat contient une indication de droits de lecture du système informatique de fournisseur d'ID pour la lecture d'un ou de plusieurs attributs stockés dans le jeton d'ID, où la transmission du certificat a lieu par le biais de la troisième session,
∘ vérification, par le programme, si les droits de lecture indiqués dans le certificat sont suffisants pour permettre un accès en lecture du système informatique de fournisseur d'ID sur le ou les attributs à lire selon la spécification d'attributs,
- transmission d'une réponse (174) du système informatique de fournisseur d'ID au système informatique de service par le biais du système informatique d'utilisateur, où la transmission de la réponse a lieu par le biais du réseau, où la réponse contient le ou les attributs lus et où la réponse est signée par le système informatique de fournisseur d'ID,
- exécution de la transaction à l'aide du ou des attributs par le système informatique de service, où il est fait appel au programme par le navigateur d'internet au moyen d'un URL (194) local,
où l'URL local contient un numéro de port prédéterminé de manière fixe selon le protocole de contrôle de transmissions TCP, où l'URL local est transmis ensemble avec la requête (166) du système informatique de service au système informatique d'utilisateur afin d'activer l'appel du programme à l'aide de l'URL local par le navigateur d'internet, où, pour l'authentification de l'utilisateur vis-à-vis du jeton d'ID les étapes suivantes sont exécutées :
- création d'une page web (198) par le programme (113) qui contient une description selon la spécification d'attributs des attributs à lire à partir du jeton d'ID et une description du certificat de qualification du système informatique de service, ainsi qu'une demande de saisie vis-à-vis de l'utilisateur pour la saisie de ses données d'authentification pour l'authentification vis-à-vis du jeton d'ID,
- réponse du programme à l'appel de l'URL local avec la page web (198) de sorte que la page web est reproduite par le navigateur d'internet,
- saisie des données d'authentification par l'utilisateur en raison de la demande de saisie,
- exécution de l'authentification de l'utilisateur vis-à-vis du jeton d'ID à l'aide des données d'authentification saisies.
